# EUROPEAN PATENT SPECIFICATION

(11) **EP 2 233 343 B1**
(45) Date of publication and mention of the grant of the patent: **10.08.2011**
(21) Application number: 10157719.5
(22) Date of filing: 25.03.2010
(51) Int. Cl.: B60K 11/08

(54) **Movable grille shutter device for vehicle**
Bewegliche Grillblendenvorrichtung für ein Fahrzeug
Dispositif d'obturateur de calandre amovible pour véhicule

(30) Priority: 25.03.2009 JP 2009073225
(43) Date of publication of application: 29.09.2010
(73) Proprietor: Aisin Seiki Kabushiki Kaisha, Aichi-ken 448-8650 (JP)
(72) Inventor: Watanabe, Hiroshi, Kariya Aichi 448-8650 (JP); Shikatani, Yasumasa, Nagoya Aichi 461-0004 (JP)
(74) Representative: Pautex Schneider, Nicole Véronique

(56) References cited:
- EP-A1- 1 522 448
- DE-A1-102004 026 419
- US-A1- 2007 169 725

## Description

### TECHNICAL FIELD

This disclosure relates to a movable grille shutter device for a vehicle.

### BACKGROUND DISCUSSION

A known movable grille shutter device disclosed in JP2007-1503A (hereinafter referred to as Reference 1) includes a case having multiple fin members (louvers). For example, a technique by which the case is attached to a vehicle body is described in Reference 1. Such technique increases assemblability and operation efficiency of the movable grille shutter device.

According to the movable grille shutter device described in Reference 1, the multiple fin members are movably supported by the case and driven by a drive mechanism so as to rotate from a fully opened state to a fully closed state, and vice versa. Accordingly, when the fin members are In the fully opened state, outside air is drawn into an engine compartment in order to cool the engine compartment, thereby preventing the engine compartment from overheating. Further, when the movable grille devices are arranged at grille opening portions of an ornament grille and a bumper, respectively, in a vertical direction of a vehicle, a closing operation of only either one of the movable grille devices arranged at the ornament grille and the bumper may be controlled.

However, according to the technique disclosed in Reference 1, even when a control for operating a portion of the multiple fin members into the fully closed state is desired, all of the fin members arranged in one of the movable grille shutter devices are operated into the fully closed state. In addition, since the movable grille shutter devices are arranged at the ornament grille and the bumper in the vertical direction, whole upper and lower sides of an engine compartment are cooled; however, a desired partial portion of the engine compartment may not be cooled. Accordingly, a specific device or component locally arranged in the engine compartment may not be cooled as desired.

In addition, the closing operation of one of the movable grille shutter devices is achievable; however, a drive mechanism (actuator, drive unit) is required for each movable grille shutter device in such closing operation. Accordingly, two drive mechanisms are required respectively for the above-mentioned grille shutter devices and therefore require an additional wire. Consequently, the cost and weight of the grille shutter device increase.
EP152244, which comprises the features mentioned in the preamble of claim 1, discloses an air flow adjusting device having a movable unit with a flap whose one pivoting end has a sprocket wheel to control the pivoting of the flap. The wheel is coupled to a cylindrical axis of the end of the flap mounted in rotation in the corresponding pole. An endless screw permits the driving of the wheel to bring the flap to releasing position or closing position of an air flow passage opening. US2007169725 discloses a device for regulating an air flow for engine cooling, comprising a fan element arranged over part of an exchanger face of a heat exchanger which can be traversed by air, and a covering element which is arranged over a further part of the exchanger face, the covering element extending from the fan element up to an end of the exchanger face, and it being possible for the covering element to be at least partially selectively opened in order to allow air to flow through. A device which provides an improved degree of efficiency of the heat exchanger in at least one operating state of a motor vehicle is provided in that it is possible for a first opening section, which, in order to avoid excessive recirculation, is at a minimum distance from the fan element, of the covering element to be selectively opened and in that it is possible for at least one second opening section which substantially adjoins the fan element to be selectively opened.
E102004026419 discloses a device having an upper capture shaft device with an upper air capture zone and a lower capture shaft device with a lower air capture zone, whereby control arrangements are provided both in the region of the upper capture shaft device and also in the region of the lower capture device for adjusting the air flow passing through the upper and lower capture devices taking into account the vehicle operating state.

A need thus exists for a movable grille shutter device for a vehicle, which is configured to include only a minimum number of drive units and to cool a predetermined partial portion of an engine compartment.

### SUMMARY

The present invention relates to a movable grille shutter device according to claim 1.

Accordingly, in the case of operating a portion of the plurality of louvers, any of the louvers in the case is set in such a way that a desired local portion of the engine compartment may be cooled, thereby appropriately cooling a desired specific device or component (for example, a radiator and an inverter), preventing a turbulent flow of air occurring because of the air drawn from the grille opening portion and increasing a discharge efficiency of the air discharged from the engine compartment. In particular, a portion of the engine compartment cooled by the movable grille shutter device is not limited to an internal-combustion and the movable grill shutter device may be applicable to cool batteries for electric and hybrid vehicles. Additionally, air for cooling the controlling circuits of the inverter and the like is absorbed into the engine compartment by means of the movable grill shutter thereby maintain a temperature of a target portion in an appropriate cooled state. Further, a flow rate of the air may be modified depending on opening of the plurality of louvers. Moreover, only one drive unit is sufficient to operate the plurality of louvers. Accordingly, the number of applicable drive units is reduced and the cost of the movable grille shutter device is minimized. Further, an additional wire is not required and an increase of the weight of the movable grille shutter device due to the additional wire is prevented.

Accordingly, in addition to the aforementioned effects, rotational directions of the drive unit are simply diverted to vary the operation of the louvers. Consequently, the opening and closing operations of the louvers are easily controlled.

According to further aspect of the present invention, the case comprises a plurality of cases, only one of the cases accommodates the drive unit, and each of any other case accommodates the link mechanism which is operatively connected to the drive unit by a connecting member.

In the case of operating a portion of the plurality of louvers, any of the louvers in the plurality of cases is set in such a way that the desired local portion of the engine compartment may be cooled, thereby appropriately cooling the desired specific device or component (for example, the radiator and the inverter), preventing the turbulent flow of air occurring because of the air drawn from the grille opening portion, and increasing the discharge efficiency of the air discharged from the engine compartment. In particular, a portion of the engine compartment cooled by the movable grille shutter device is not limited to the internal-combustion and the movable grill shutter device may be applicable to cool the batteries for the electric and hybrid vehicles. Additionally, air for cooling the controlling circuits of the inverter and the like is absorbed into the engine compartment by means of the movable grill shutter device to thereby maintain the temperature of the target portion in the appropriate cooled state. Further, the flow rate of the air may be modified depending on the opening of the plurality of louvers. Moreover, only one drive unit is sufficient to operate the plurality of louvers. Accordingly, the number of applicable drive units is reduced and the cost of the movable grille shutter device is minimized. Further, an additional wire is not required and an increase of the weight of the movable grille shutter device due to the additional wire is prevented.

According to still another aspect of the present invention, the link mechanism operates all of or the portion of the louvers arranged in a portion of the plurality of cases when the drive unit is driven in the first direction, and the link mechanism operates all of the plurality of louvers arranged in the plurality of cases when the drive unit is driven in the second direction.

Accordingly, in addition to the aforementioned effects, the rotational directions of the drive unit are simply diverted to vary the operation of the louvers. As a result, the opening and closing operations of the louvers are easily controlled.

According to another aspect of the present invention, the link mechanism includes a cam connected to a main shaft of the drive unit, a first link bracket having a first end connected to the main shaft of the drive unit, a second link bracket having a first end rotatably attached to a second end of the first link bracket and a second end connected to the portion of the louvers, and a swing arm connected to the louvers excluding the louvers to which the second link bracket is connected. Further, when the cam rotates under the fully closed state of the louvers to which the second bracket is connected, the cam engages with the swing arm and operates the louvers to which the swing arm is connected.

When the drive unit is driven in the first direction under the fully closed state of the louvers, the portion of the louvers is operated by a driving force of the drive unit via the first and second link brackets so as to change to the fully opened state. Meanwhile, when the drive unit is driven in the second direction under the aforementioned closed state of the portion of the louvers, the cam engages with the swing arm and the rest of the louvers excluding the portion of the louvers is operated by the driving force via the swing arm. Accordingly, the operating load of the drive unit is separately applied for controlling the opening and closing operations of the portion of the louvers and the opening and closing operations of the rest of the louvers, therefore reducing the output of the drive unit. As a result, the drive unit operating at very low voltage is obtained.

According to further aspect of the present invention, the case is provided with a stopper portion selectively contacting the swing arm and the cam has an outer peripheral surface selectively contacting the swing arm. Further, the position of the swing arm is maintained by the outer peripheral surface of the cam and the stopper portion of the case that are in contact with the swing arm when the drive unit is driven to operate the portion of the louvers into the fully closed state and the position of the swing arm maintained by the outer peripheral surface of the cam and the stopper portion of the case is released when the drive unit is driven to operate all of the louvers into the fully opened state.

Additionally, the movable grille shutter device is configured so that the stopper portion selectively contacting the swing arm is arranged at the case. Moreover, a slide surface contacting an end face of the swing arm is formed on the outer peripheral surface of the cam. Accordingly, for example, when the portion of the louvers under the fully opened state is operated in the second direction (in the fully closing direction), i.e. the drive unit is driven in the second direction under the fully opened state of the portion of the louvers, the position of the swing arm is appropriately maintained because the swing arm is retained at the outer peripheral surface of the cam and the stopper portion of the case so as not to rotate. Further, only when the drive unit is driven in the second direction under the fully opened state of the portion of the louvers, the maintained position of the swing arm relative to the outer peripheral surface of the cam is released within a range specified by a notch formed on the outer peripheral surface of the cam. Accordingly, the position of the swing arm may be maintained by simply configuring the cam.

According to still further aspect of the present invention, the link mechanism is configured so that the cam connected to the main shaft of the drive unit locks a member connected to any of the louvers.

Accordingly, in addition to the aforementioned effects, the operation of the louvers is locked by the member connected to any of the louvers, therefore the position of the louvers is easily maintained and vibrations in the predetermined position are prevented.

According to another aspect of the present invention, the movable grille shutter device further includes a drive control section controlling the opening of all of or the portion of the louvers accommodated in the case.

Accordingly, in addition to the aforementioned effects, the flow rate of the air is appropriately adjusted to thereby control the temperature applied to the local portion of the engine compartment. Furthermore, the turbulent flow of air in the engine compartment due to the air drawn from the grille opening portion is surely inhibited.

According to further aspect of the present invention, the drive control section controls the opening of all of or the portion of the louvers accommodated in the case in accordance with a speed of the vehicle, detected by a speed sensor.

Accordingly, the temperature applied to the local portion of the engine compartment is controlled based on the speed detected by the speed sensor to thereby prevent the turbulent flow of air in the engine compartment due to the air drawn from the grille opening portion.

According to still further aspect of the present invention, the drive control section controls the opening of all of or the portion of the louvers accommodated in the case in accordance with a water temperature of the radiator, detected by a temperature sensor.

Accordingly, the temperature applied to the local portion of the engine compartment is controlled based on the water temperature detected by the temperature sensor to thereby prevent the turbulent flow of air in the engine compartment due to the air drawn from the grille opening portion.

According to another aspect of the present invention, the louvers arranged in the case are divided in the plurality of groups and the opening of the louvers is controlled for each of the plurality of groups.

Accordingly, the opening of the louvers is appropriately adjusted for each group. As a result, the temperature applied to the local portion of the engine compartment is controlled and the turbulent flow of air in the engine compartment due to the air drawn from the grille opening portion is surely prevented.

### BRIEF DESCRIPTION OF THE DRAWINGS

The foregoing and additional features and characteristics of this disclosure will become more apparent from the following detailed description considered with reference to the accompanying drawings, wherein:

Fig. 1 is a perspective view of an installation example of a moveable grille shutter device for a vehicle according to a first embodiment disclosed here;

Fig. 2 is another perspective view of the installation example of the moveable grille shutter device according to the first embodiment disclosed here;

Fig. 3 is a perspective view of a configuration example of the movable grille shutter device according to the first embodiment as seen from a front grille of the vehicle;

Fig. 4 is a perspective view of the configuration example of the movable grille shutter device according to the first embodiment as seen from a radiator of the vehicle;

Fig. 5 is an exploded perspective view of a configuration example of a first case of the movable grille shutter according to the first embodiment disclosed here;

Fig. 6 is a perspective view of a configuration example of a first link mechanism arranged in the first case of the movable grille shutter according to the first embodiment as seen from the radiator;

Fig. 7A is a lateral view taken along the line 7A-7A and illustrating an example where the first link mechanism arranged in the first case of the movable grille shutter device according to the first embodiment as seen from the radiator is in a fully closed state;

Fig. 7B is a plan view illustrating the example where the first link mechanism arranged in the first case of the movable grille shutter device according to the first embodiment as seen from the radiator is in the fully closed state;

Fig. 8A is a lateral view taken along the line 8A-8A and illustrating an example where the first link mechanism arranged in the first case of the movable grille shutter device according to the first embodiment as seen from the radiator is in a partially opened state in accordance with a rotation of an actuator driven in a first direction;

Fig. 8B is a plan view illustrating the example where the first link mechanism arranged in the first case of the movable grille shutter device according to the first embodiment as seen from the radiator is in the partially opened state in accordance with the rotation of the actuator driven in the first direction;

Fig. 9A is a lateral view taken along the line 9A-9A and illustrating an example where the first link mechanism arranged in the first case of the movable grille shutter device according to the first embodiment as seen from the radiator is in a fully opened state in accordance with the rotation of the actuator in the first direction;

Fig. 9B is a plan view illustrating the example where the first link mechanism arranged in the first case of the movable grille shutter device according to the first embodiment as seen from the radiator is in the fully opened state in accordance with the rotation of the actuator in the first direction;

Fig. 10 is a perspective view illustrating the example where the first link mechanism arranged in the first case of the movable grille shutter device according to the first embodiment as seen from the radiator is in the fully opened state in accordance with the rotation of the actuator in the first direction;

Fig. 11 is a perspective view illustrating the example where the first link mechanism arranged in the first case of the movable grille shutter device according to the first embodiment as seen from the front grille is in the fully opened state in accordance with the rotation of the actuator in the first direction;

Fig. 12A is a lateral view taken along the line 12A-12A and illustrating a condition of the first link mechanism arranged in the first case of the movable grille shutter device according to the first embodiment as seen from the radiator right after the actuator is driven in a second direction;

Fig. 12B is a plan view illustrating the condition of the first link mechanism arranged in the first case of the movable grille shutter device according to the first embodiment as seen from the radiator right after the actuator is driven in the second direction

Fig. 13A is a lateral view taken along the line 13A-13A and illustrating an example where the first link mechanism arranged in the first case of the movable grille shutter device according to the first embodiment as seen from the radiator is in the partially opened state in accordance with the rotation of the actuator in the second direction;

Fig. 13B is a plan view illustrating the example where the first link mechanism arranged in the first case of the movable grille shutter device according to the first embodiment as seen from the radiator is in the partially opened state in accordance with the rotation of the actuator in the second direction;

Fig. 14A is a lateral view taken along the line 14A-14A and illustrating an example where the first link mechanism arranged in the first case of the movable grille shutter device according to the first embodiment as seen from the radiator is in the fully opened state in accordance with the rotation of the actuator in the second direction;

Fig. 14B is a plan view illustrating the example where the first link mechanism arranged in the first case of the movable grille shutter device according to the first embodiment as seen from the radiator is in the fully opened state in accordance with the rotation of the actuator in the second direction;

Fig. 15 is a perspective view illustrating the example where the first link mechanism arranged in the first case of the movable grille shutter device according to the first embodiment as seen from the front grille is in the fully opened state in accordance with the rotation of the actuator in the second direction;

Fig. 16 is an exploded perspective view of a configuration example of a second case of the movable grille shutter according to the first embodiment disclosed here;

Fig. 17 is a perspective view of a configuration example of a second link mechanism arranged in the second case of the movable grille shutter according to the first embodiment as seen from the radiator;

Fig. 18A is a lateral view taken along the line 18A-18A and illustrating an example where the second link mechanism arranged in the second case of the movable grille shutter device according to the first embodiment as seen from the radiator is in the fully closed state;

Fig. 18B is a plan view illustrating the example where the second link mechanism arranged in the second case of the movable grille shutter device according to the first embodiment as seen from the radiator is in the fully closed state;

Fig. 19A is a lateral view taken along the line 19B-19B and illustrating an example where the second link mechanism arranged in the second case of the movable grille shutter device according to the first embodiment as seen from the radiator is in the partially opened state in accordance with the rotation of the actuator in the second direction;

Fig. 19B is a plan view illustrating the of the example where the second link mechanism arranged in the second case of the movable grille shutter device according to the first embodiment as seen from the radiator is in the partially opened state in accordance with the rotation of the actuator in the second direction;

Fig. 20A is a lateral view taken along the line 20A-20A and illustrating an example where the second link mechanism arranged in the second case of the movable grille shutter device according to the first embodiment as seen from the radiator is in the fully opened state in accordance with the rotation of the actuator in the second direction;

Fig. 20B is a plan view illustrating the example where the second link mechanism arranged in the second case of the movable grille shutter device according to the first embodiment as seen from the radiator is in the fully opened state in accordance with the rotation of the actuator in the second direction;

Fig. 21 is a perspective view of a configuration example of the first link mechanism arranged in the first case of the movable grille shutter device according to a second embodiment disclosed here, as seen from the radiator;

Fig. 22 is a perspective view illustrating an example where the first link mechanism arranged in the first case of the movable grille shutter device according to the second embodiment as seen from the front grille is in the fully opened state in accordance with the rotation of the actuator in the first direction;

Fig. 23 is a perspective view of a configuration example of the first link mechanism arranged in the first case of the movable grille shutter device according to a third embodiment as seen from the radiator;

Fig. 24 is a perspective view illustrating an example where the first link mechanism arranged in the first case of the movable grille shutter device according to the third embodiment as seen from the radiator is in the fully opened state in accordance with the rotation of the actuator in the first direction; and

Fig. 25 is a perspective view illustrating a modified example of the example shown in Fig. 1.

### DETAILED DESCRIPTION

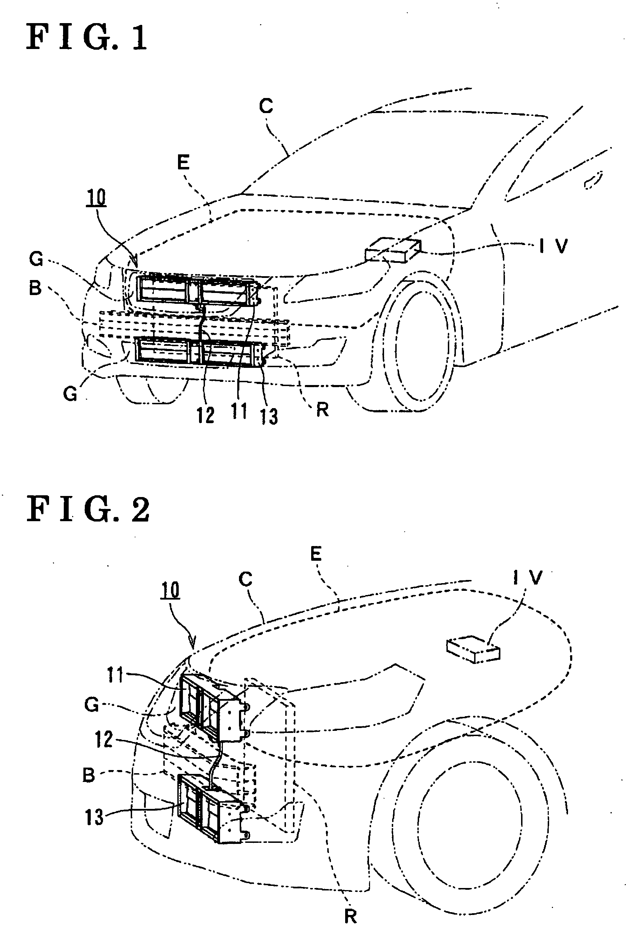

A movable grille shutter device 10 for a vehicle according to a first embodiment will be described below with reference to the illustrations of Figs. 1 to 20. For example, the movable grille shutter device 10 according to the first embodiment is configured so that a connecting member 12 connects first and second link mechanisms 31 and 32 to each other. The first and second link mechanisms 31 and 32 are respectively arranged in first and second cases (cases) 11 and 13 attached to a vehicle body C. Further, the movable grille shutter device 10 selectively operates a portion (for example, two louvers) of a plurality of louvers 21, 22, 23, 24, 25, 26, 27, and 28 arranged one of the first and second cases 11 and 13 or all of the plurality of louvers 21 to 28. In addition, the louvers 21 to 28 correspond to fin members.

Configuration and installation examples of the movable grille shutter device 10 according to the first embodiment will be explained as follows with reference to Fig. 1 and Fig. 2. The movable grille shutter device 10 mainly includes the first and second cases 11 and 13 and the connecting member 12. The first case 11 includes the plurality of louvers 21, 22, 23, and 24 and the second case 13 includes the plurality of louvers 25, 26, 27, and 28. Further, the first and second cases 11 and 13 have the first and second link mechanisms 31 and 32, respectively, as will be described in detail below. The connecting member 12 connects the first link mechanism 31 arranged in the first case 11 to the second link mechanism 32 arranged in the second case 13. For example, the connecting member 12 is formed by a wire member, a rod member, and the like. The wire includes a core member 12a and a cover member 12b covering the core member 12a. A displacement of the first link mechanism 31 is transmitted to the second link mechanism 32 by variations of a relative movement of the core member 12a to the cover member 12b. Further, flexibility in assembly of the first and second link mechanisms 31 and 32 is obtained due to the use of the connecting member 12.

The movable grille shutter device 10 is attached to the vehicle body C between a grille opening portion G of a front grille and a radiator R. As illustrated in Fig. 1 and Fig. 2, the first and second cases 11 and 13 are attached to the vehicle body C so as to be respectively arranged at upper and lower sides of a bumper B in a vertical direction of the vehicle. According to such arrangement, when the louvers 21, 22, 23, and 24 of the first case 11 are in an opened state, air drawn from the grille opening portion G is forwarded to an upper side of the radiator R and received thereby. Afterward, the air is sent to an engine compartment E so as to flow thereinto. An inverter IV is arranged in the engine compartment E. Further, when the louvers 25, 26, 27, and 28 of the second case 13 are in an opened state, the air drawn from the grille opening portion G is forwarded to a lower side of the radiator R and received thereby. Afterward, the air is sent to the engine compartment E so as flow thereinto.

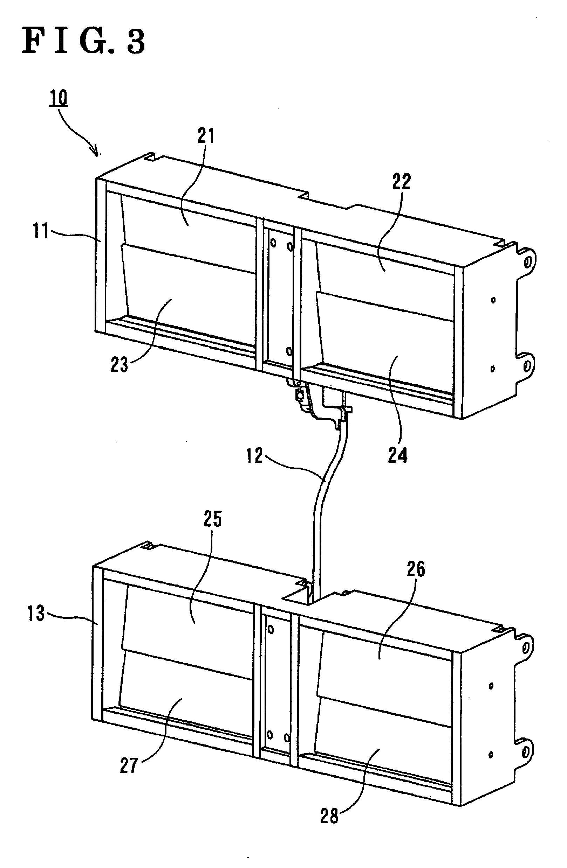

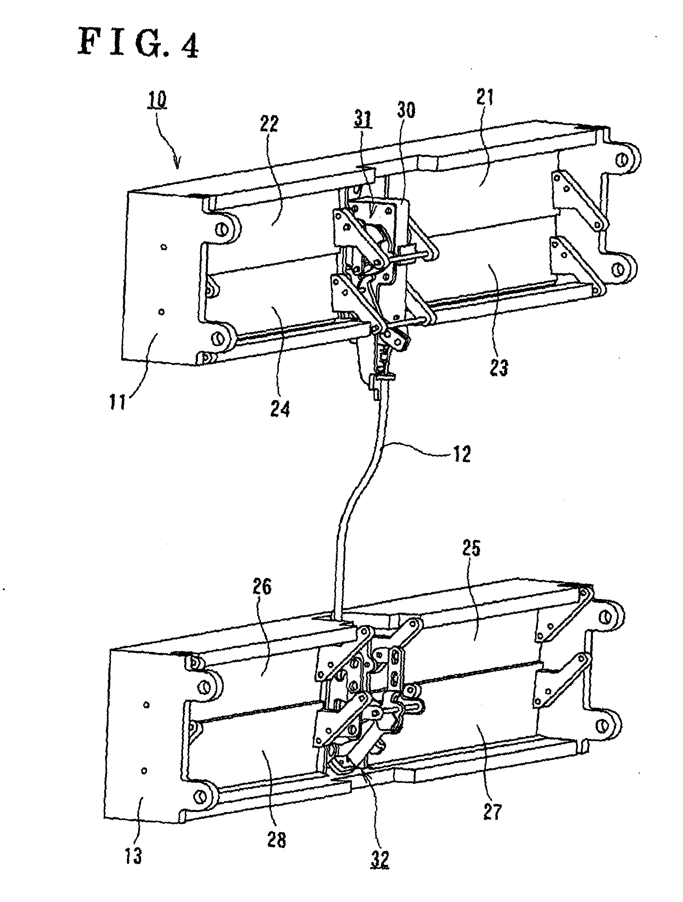

The configuration of the movable grille device 10 will be explained as follows with reference to Figs. 3 to 5. Hereinafter, a direction seen from the front grille will be "a front side" of the movable grille shutter device 10 and a direction seen from the radiator R will be "a back side" of the movable grille shutter device 10. Fig. 3 shows the front side of the movable grille shutter device 10 when the plurality of louvers 21 to 28 is in a fully closed state and Fig. 4 shows the rear side of the movable grille shutter device 10 when the plurality of louvers 21 to 28 is in the fully closed state. Such fully closed state is defined as an initial state. In examples shown in Fig. 3 and Fig. 4, four louvers 21, 22, 23, and 24 are provided in the first case 11 and four louvers 25, 26, 27, and 28 are provided in the second case 13. Further, as illustrated in Fig. 4., an actuator 30 and the first link mechanism 31 are arranged in the first case 11 and the second link mechanism 32 is arranged in the second case 13 in which the actuator 30 is not arranged. Furthermore, the first and second link mechanisms 31 and 32 are connected to each other by means of the connecting member 12 formed by the core member 12a and the cover member 12b. In addition, the second link mechanism 32 is operatively connected to the actuator 30 via the connecting member 12.

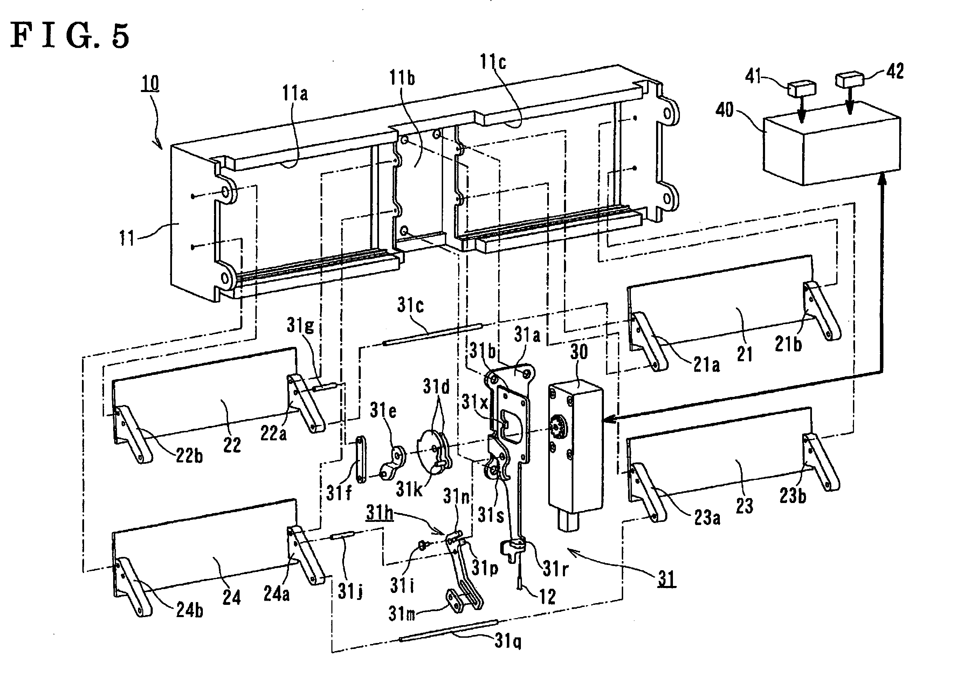

A configuration of the first case 11 will be explained with reference to Fig. 5 seen from the back side of the movable grille shutter device 10. The first case 11 includes a first accommodating window 11 a, a recessed accommodating portion 11 b, and a second accommodating window 11c. The louvers 22 and 24 are accommodated in the first accommodating window 11a so as to be separately rotatable. The first link mechanism 31 is accommodated in the recessed accommodating portion 11b. The louvers 21 and 23 are accommodated in the second accommodating window 11c so as to be separately rotatable. The louver 22 includes supporting portions 22a and 22b and the louver 24 includes supporting portions 24a and 24b in order to rotate the louvers 22 and 24 separately in the first accommodating window 11a. Further, the louver 21 includes supporting portions 21a and 21b and the louver 23 includes supporting portions 23a and 23b in order to rotate the louvers 21 and 23 separately in the second accommodating window 11c. Furthermore, the supporting portions 21 a, 21 b, 22a, 22a, 22b, 23a, 23b, 24a, and 24b may be separated from or integrally formed with the respective louvers 21, 22, 23, and 24.

The actuator 30 serves as a drive unit that operates the first and second link mechanisms 31 and 32 described below. For example, a motor, a cylinder, a solenoid, and the like are applied to the actuator 30. The actuator 30 is controlled so as to be driven in accordance with a driving signal transmitted from a drive control section 40. That is, the actuator 30 is driven in accordance with the driving signal to open and close a portion of or all of the plurality of louvers 21 to 28 via the first and second link mechanisms 31 and 32. In addition, only one actuator 30 is sufficient to rotate the plurality of louvers 21 to 28. Accordingly, an additional actuator is not required, therefore reducing the number of actuators (drive units) 30 and costs. Moreover, an additional wire is not required and an increase of the weight due to the additional wire is prevented.

The first link mechanism 31 includes a base bracket 31 a, rods 31 c, 31g, 31 j, and 31q, a cam 31d, first and second link brackets 31e and 31f, a swing arm 31h, a bolt (attachment member) 31i, a fixing member 31 m, and the like. The first link mechanism 31 operates a portion of or all of the louvers 21, 22, 23, and 24. The rods 31c, 31g, 31j, 31q, and the like serve as members to be connected to the cam 31d.

Function and configuration examples of the drive control section 40 will be explained as follows. The drive control section 40 is, for example, an ECU. The drive control section 40 mainly includes a CPU or an electric circuit. The drive control section 40 receives sensor signals that are transmitted from various sensors such as a speed sensor 41 detecting a vehicle speed and a coolant temperature sensor (temperature sensor) 42 detecting a water temperature of the radiator R. Afterwards, the driving signal is transmitted to the actuator 30 so that temperatures of the radiator R, the inverter IV, and the like shown in Fig. 1 may be set to predetermined temperatures.

The base bracket 31 a includes a seat portion 31 b, an insertion portion 31 r, a protruding portion 31 x, a supporting portion 31 s, and the like. The seat portion 31 b is vertically provided at the base bracket 31 a so as to fix the actuator 30 thereat. The insertion portion 31 r is formed in a lower end of the seat portion 31 b in the vertical direction of the vehicle. The connecting member 12 (core member 12a) is inserted into the insertion portion 31 r. The protruding portion 31x is bent at an inner periphery of a bore perforated in the seat portion 31 b so as to have an L-shape. The protruding portion 31x selectively contacts the cam 31d. The supporting portion 31s is vertically provided at the base bracket 31 a so as to support the swing arm 31 h to be rotatable. Further, a lower end of the supporting portion 31 s in the vertical direction is bent so as to have an L-shape. The bent portion of the supporting portion 31 a serves as a stopper portion 31w restricting a rotation range of the swing arm 31 h.

The rod 31 c connects the supporting portion 21 a of the louver 21 and the supporting portion 22a of the louver 22 to each other and simultaneously rotates the louvers 21 and 22. Similarly, the rod 31q connects the supporting portion 23a of the louver 23 and the supporting portion 24a of the louver 24 to each other and simultaneously rotates the louvers 23 and 24.

The cam 31 d is connected to a main shaft (for example, a rotary shaft, a rod, and the like) of the actuator 30. A known connecting method to connect the cam 31 d to the main shaft of the actuator 30 may be arbitrarily used. Accordingly, the cam 31 d may be directly connected to the main shaft of the actuator 30 or a power transmission device such as a gear mechanism and the like may be arranged between the main shaft and the cam 31d. The cam 31d includes a ply metal configuration formed by first and second plates fitted to each other. Recessed and convex portions are formed on an outer peripheral surface of the first plate of the cam 31 d. The outer peripheral surface of the first plate of the cam 31 d selectively contacts the swing arm 31 h. A pin 31 k is arranged at the second plate of the cam 31 d.

The first link bracket 31 e is connected to the main shaft of the actuator 30 in the same way as the cam 31d. The second link bracket 31f and the rod 31g are arranged between the first link bracket 31 e and the louver 22. Accordingly, when the main shaft of the actuator 30 is driven, the louver 22 is operated via the first link bracket 31e, the second link bracket 31f, and the rod 31g. Further, as described above, the louver 22 is connected to the louver 21 via the rod 31c; therefore, the louvers 21 and 22 simultaneously rotate when the main shaft of the actuator 30 is driven.

The whole swing arm 31 h is formed into a dog-leg shape and rotatably attached to the base bracket 31 a by means of the bolt (attachment member) 31 i. Such swing arm 31 h includes a rotation center at a first end. The first end of the swing arm 31 h includes first and second protruding portions 31 n and 31 p having a crescent wrench like shape. The first protruding portion 31 n is formed to be longer than the second protruding portion 31 p. A clearance (i.e. recessed portion) is formed between the first and second protruding portions 31 n and 31 p. The pin 31k described below in detail is inserted into the clearance. An elongated hole is formed in a second end of the swing arm 31 h. A first end of the connecting member 12 is fixed in the elongated hole of the second end of the swing arm 31 h by means of the fixing member 31 m formed into a plate shape. Further, the first end of the swing arm 31 h is connected to the supporting portion 24a of the louver 24 via the rod 31j. As described above, the louvers 24 and 23 are connected to each other via the rod 31q; therefore, the louvers 24 and 23 are simultaneously operated when the swing arm 31 h is rotated.

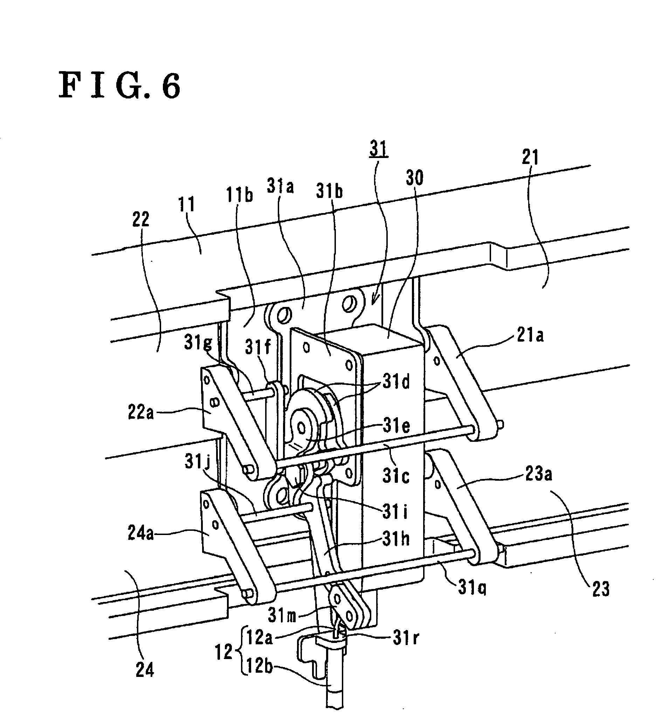

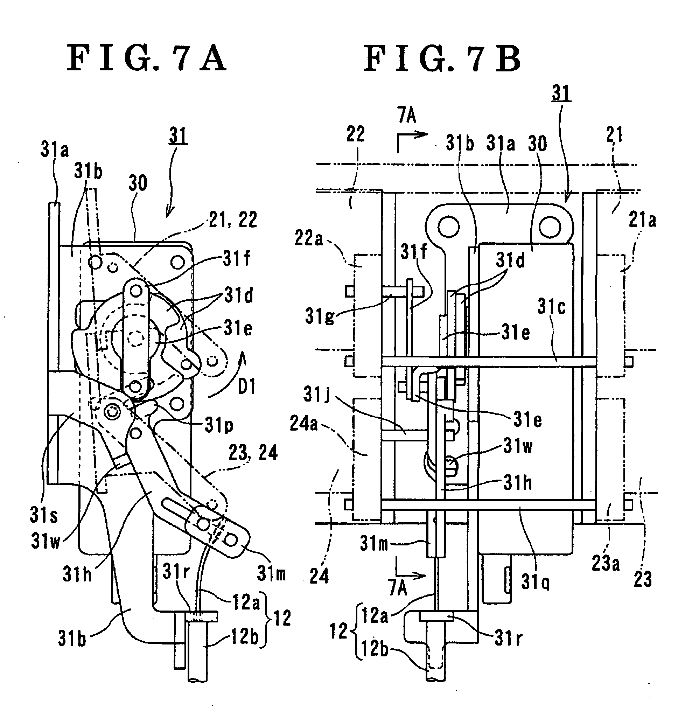

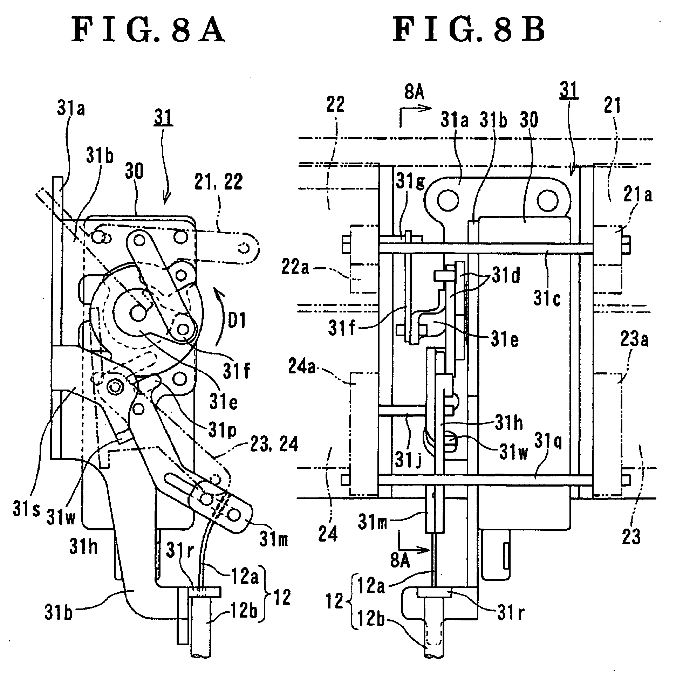

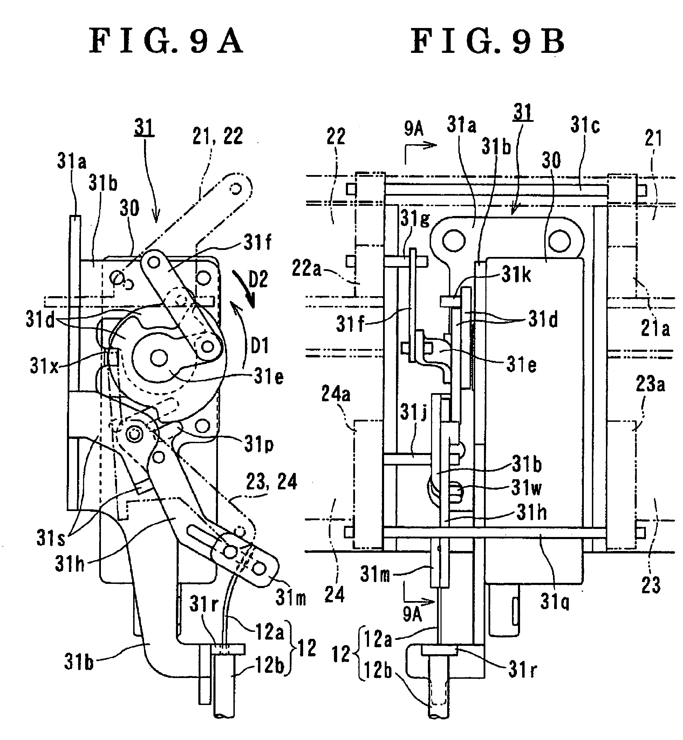

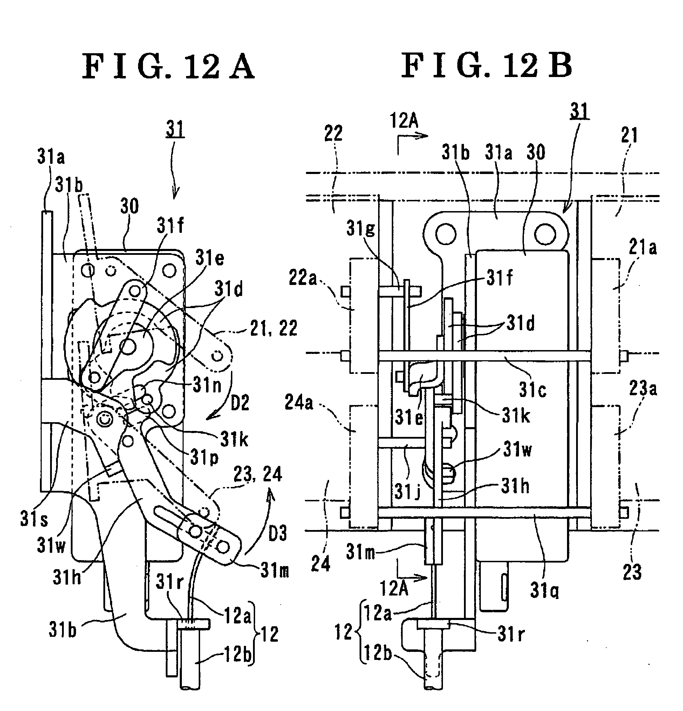

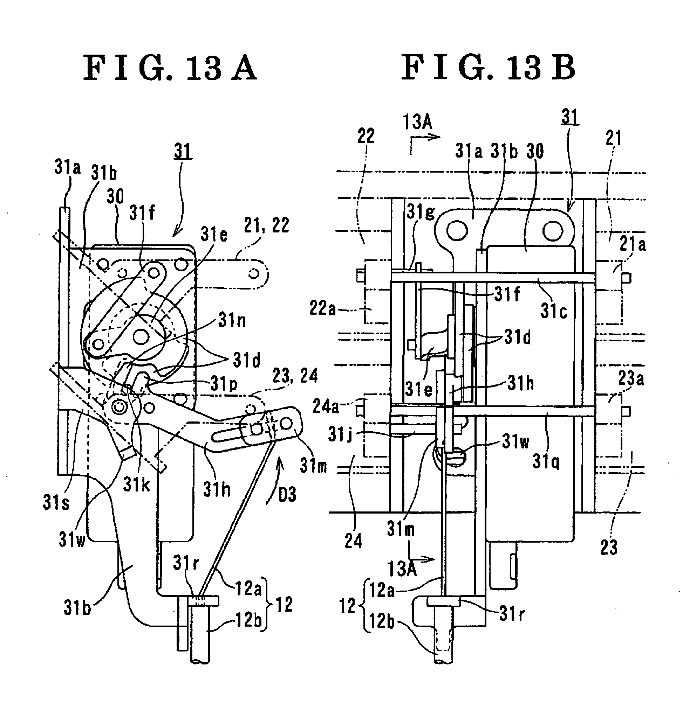

According to the movable grille shutter device 10 configured as described above, the first link mechanism 31 of the first case 11, operating in accordance with the driving signal transmitted from the drive control section 40 and the plurality of louvers 21 to 28 will be described as follows with reference to Figs. 6 to 15. Specifically, operation examples of the actuator 30 driven in a first direction are shown in Figs. 6 to 11 and operation examples of the actuator 30 driven in a second direction are shown in Figs. 12 to 15. Further, Fig. 7B, Fig. 8B, Fig. 9B, Fig. 12B, Fig. 13B, and Fig. 14B illustrate plan views of the back side of the movable grille shutter device 10. Furthermore, Fig. 7A, Fig. 8A, Fig. 9A, Fig. 12A, Fig. 13A, and Fig. 14A show lateral views of the front side of the movable grille shutter device 10 taken along the lines 7A-7A of Fig. 7B, 8A-8A of Fig. 8A, 9A-9A of Fig. 9A, 12A-12A of Fig. 12, and 13A-13A of Fig. 13B.

As illustrated in Fig. 6, the louvers 21, 22, 23, and 24 are in the fully closed state. That is, the air drawn from the grille opening portion G of the front grille is not forwarded into the engine compartment E so as to flow thereinto under such fully closed state of the louvers 21 to 28. The lateral view and plain view of the fully closed state are shown in Fig. 7A and Fig. 7B, respectively. As illustrated in Fig. 7A and Fig. 7B, the swing arm 31 h is supported by the bent portion (stopper portion 31w) of the supporting portion 31s in contact therewith so as not to rotate under the fully closed state. The second protruding portion 31 p of the swing arm 31 h is in contact with the outer peripheral surface of the first plate of the cam 31 d. Under such condition, when the actuator 30 is driven in the first direction corresponding to a direction (a counterclockwise rotational direction) indicated by an arrow D1 shown in Fig. 7A, a condition shown in Fig. 7A and Fig. 7B changes to a condition shown in Fig. 8A and Fig. 8B. Further, when the actuator 30 is continuously driven in the (counterclockwise) direction indicated by the arrow D1, the condition shown in Fig. 8A and Fig. 8B changes to a condition shown in Fig. 9A and Fig. 9B.

The cam 31d and the first link bracket 31e rotate in accordance with the rotation of the main shaft of the actuator 30. At this time, even when the cam 31 d rotates, the swing arm 31 h does not rotate because an arc portion of the outer peripheral surface of the first plate of the cam 31 d has a substantially uniform radius. Specifically, a main body of the swing arm 31 h selectively contacts the supporting portion 31 s of the base bracket 31 a and the second protruding portion 31 p of the swing arm 31h selectively contacts the cam 31d, thereby locking the swing arm 31h. That is, the cam 31d coaxially arranged with the main shaft of the actuator 30 is configured so as to lock the swing arm 31 h (that corresponds to one of the members connected to the louvers 25, 26, 27, and 28 via the connecting member 12 and the second link mechanism 32).

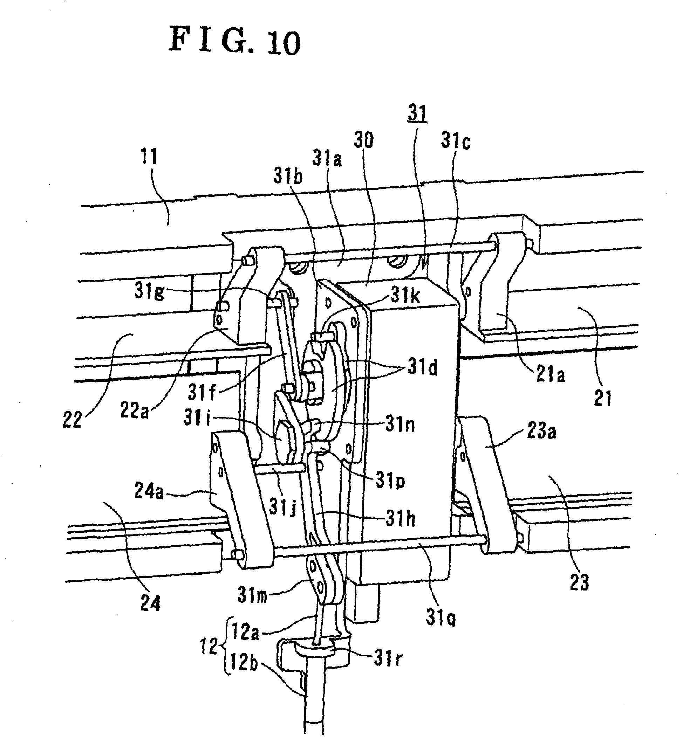

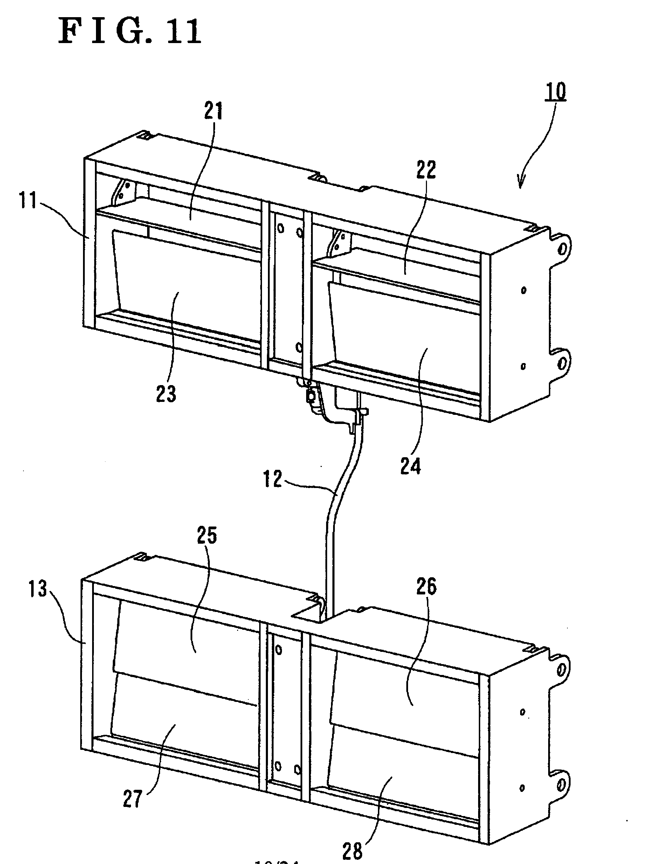

When the first link bracket 31 e rotates, the louver 22 is operated via the second link bracket 31f and the rod 31g while the louver 21 is operated via the rod 31c. Accordingly, as illustrated in Fig. 8, the louvers 21 and 22 change to a partially opened state (i.e. an example of an intermediate state). Meanwhile, the louvers 23 and 24 remain in the fully closed state. Further, when the actuator 30 is continuously driven in the first direction (direction indicated by the arrow D1), the aforementioned rotation of the cam 31d in the first direction continues. As a result, the louvers 21 and 22 change to the fully opened state and the louvers 23 and 24 remain in the fully closed state as shown in Fig. 9A and Fig. 9B. In the condition shown in Fig. 9A and Fig. 9B, the cam 31 d is in contact with the protruding portion 31 x of the seat portion 31 b so as not to rotate. Further, at this time, the swing arm 31 h does not rotate; therefore, the second mechanism 32 connected to the connecting member 12 does not operate. Accordingly, as illustrated in Figs. 10 and 11, the louvers 25, 26, 28, and 28 arranged in the second case 13 remain in the fully closed state.

In conditions shown in Figs. 10 and 11, the louvers 21 and 22 are in the fully opened state and the rest of the louvers 23, 24, 25, 26, 27, and 28 are in the fully closed state. Accordingly, a turbulent flow of air due to the air drawn from the grille opening portion G is prevented, therefore increasing a discharge efficiency of the air discharged from the engine compartment E. Further, even when the movable grille shutter device 10 receives a strong wind from an outer side of the vehicle through the grille opening portion G of the front grille, the conditions shown in Figs. 10 and 11 are surely maintained as long as the actuator 30 is not in operation.

The louvers 21 and 22 change from the fully closed state shown in Fig. 3 to the fully opened state shown in Fig. 11. Further, opening of the louvers 21 and 22 may be controlled by the driving signal transmitted from the drive control section 40 to the actuator 30 so as to stop the operation of the louvers 21 and 22 in the intermediate state. In the case of controlling the opening of the louvers 21 and 22, the intermediate state of the louvers 21 and 22 may be set in a stepped or stepless manner. When the intermediate state of the louvers 21 and 22 is set in the stepped manner, contents of driving signals for respective steps are stored in the drive control section 40 in advance and a driving signal, which corresponds to a desired step, is transmitted from the drive control section 40 to the actuator 30; thereby the rotation of the louvers 21 and 22 is stopped. When the intermediate state of the louvers 21 and 22 is set in the stepless manner, the operation of the louvers 21 and 22 is stopped based on a content (for example, a rotation angle) of a driving signal to be transmitted. When the opening of the louvers 21 and 22 is controlled in such manners, the air flowing into the engine compartment E may be adjusted. Accordingly, a temperature of attachments and components arranged in the engine compartment E is desirably maintained.

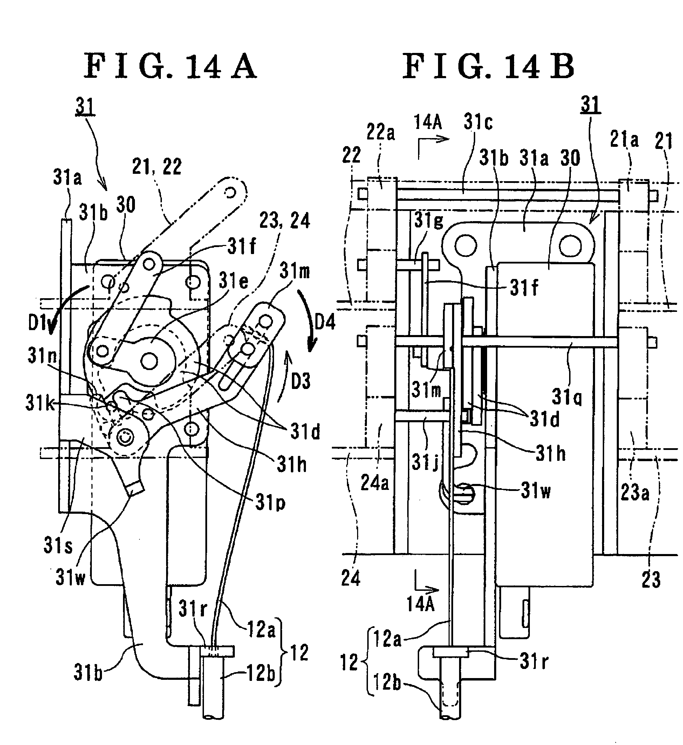

Meanwhile, when the actuator 30 is driven in a second direction (crosswise direction) indicated by an arrow D2 shown in Fig. 9A under the condition shown in Figs. 9A and 9B, the louvers 21 and 22 change from the fully opened state to the partially opened state shown in Fig. 8A and Fig. 8B and return to the initial state shown in Figs. 3, 4, 7A, and 7B. Afterward, as the actuator 30 is further driven in the second direction, a condition shown in Fig. 12A and 12B changes to a condition shown in Fig. 13A and Fig. 13B and finally changes to a condition shown in Fig. 14A and Fig. 14B. Such changes of the opening of the louvers 21, 22, 23, and 24 will be explained as follows.

Fig. 12A and Fig. 12B illustrate a condition where the actuator 30 under the initial state shown in Fig. 7A and Fig. 7B (where all of the louvers 21 to 28 are in the fully closed state) is driven slightly in the second direction. When the actuator 30 is driven and the main shaft of the actuator 30 rotates in the second direction (indicated by the arrow D2 in Fig. 12A), the cam 31d rotates in the same direction accordingly; therefore, the pin 31k arranged at the cam 31d is inserted into the clearance between the protruding portions 31 n and 31 p of the swing arm 31 h. Further, the cam 31 d continuously rotates in the second direction and the pin 31 k rotates the swing arm 31 h in a fully opening direction of the louvers 23 and 24 (indicated by an arrow D3 in Fig. 12A); thereafter, the condition shown in Fig. 13A and Fig. 13B is realized: As shown in Fig. 13A and Fig. 13B, all of the louvers 21, 22, 23, and 24 are in the partially opened state.

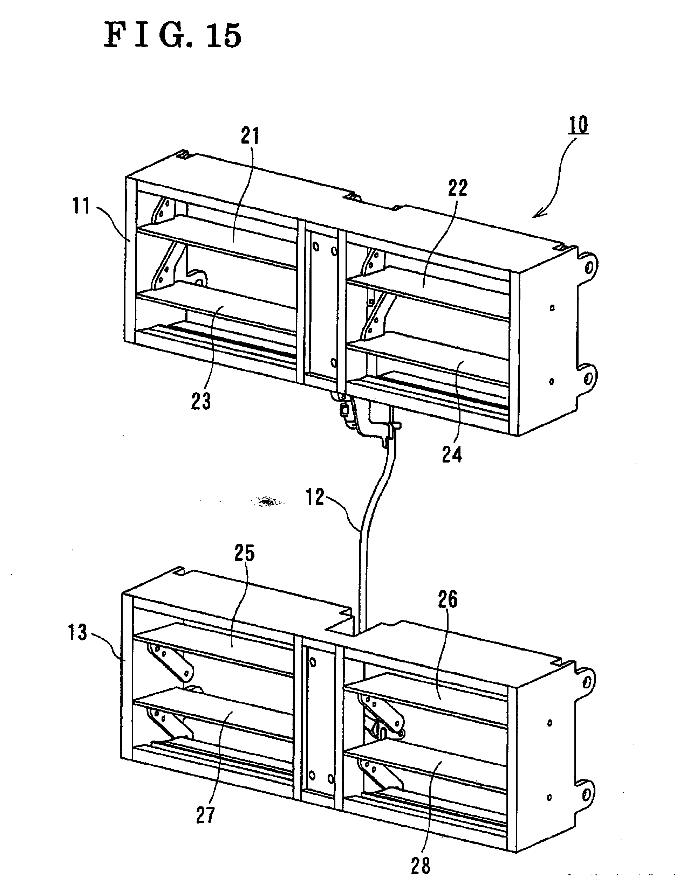

When the actuator 30 is driven in the second direction further from the condition shown in Fig. 13A and Fig. 13B and the main shaft of the actuator 30 and the cam 31d rotate in the same direction, the aforementioned rotation of the cam 31 d in the second direction continues; therefore, the condition shown in Fig. 14A and Fig. 14B is realized. In Fig. 14A and Fig. 14B, the rotation of the cam 31d is stopped while the cam 31d is in contact with the protruding portion 31x of the base bracket 31a. Moreover, Fig. 15 shows a condition of the movable grille shutter device 10 seen from the front side thereof. In addition, all of the louvers 21, 22, 23, and 24 are in the fully opened state in Figs. 14A, 14B, and 15.

Furthermore, when the actuator 30 is driven in the first direction (counterclockwise direction indicated by an arrow D1 shown in Fig. 14A) from the condition shown in Fig. 14A and Fig. 14B, the swing arm 31 h is rotated in a direction indicated by an arrow D4 shown in Fig. 14A. The louvers 21, 22, 23, and 24 are operated in accordance with the rotation of the swing arm 31 h in such a way that the condition of the first link mechanism 31 shown in Fig. 13A and Fig. 13B changes to the condition shown in Figs. 12A and 12B and thereafter returns to the initial state shown in Figs. 3, 4, 7A, and 7B.

As described above, opening and closing operations of the louvers 21, 22, 23, and 24 are controlled depending on the directions in which the main shaft of the actuator 30 rotates. In addition, when the actuator 30 is driven in the first direction under the initial state illustrated in Fig. 7, the louvers 21 and 22 that is a portion of the louvers 21, 22, 23, and 24 change from the fully closed state to the fully opened state (see Figs. 7A, 7B, 8A, 8B, 9A, 9B, 10, and 11).

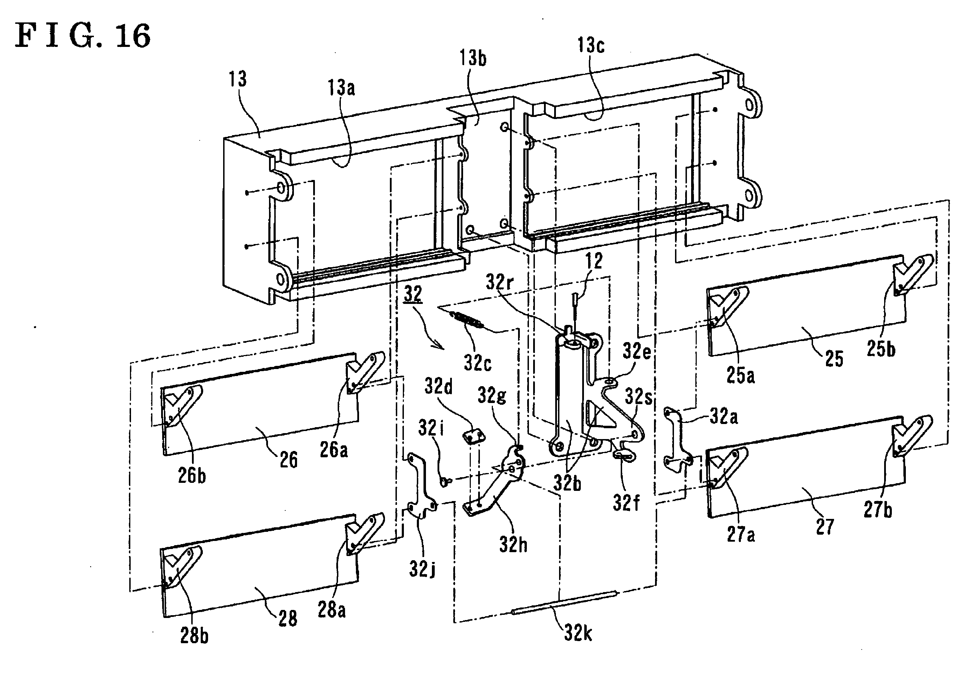

A configuration of the second case 13 will be explained as follows with reference to Fig. 16 seen from the back side of the movable grille shutter device 10. The second case 13 includes a first accommodating window 13a, a recessed accommodating portion 13b, and a second accommodating window 13c. The louvers 26 and 28 are accommodated in the first accommodating window 13a so as to be separately rotatable. The second link mechanism 32 is accommodated in the recessed accommodating portion 13b. The louvers 25 and 27 are accommodated in the second accommodating window 13c so as to be separately rotatable. The louver 26 includes supporting portions 26a and 26b and the louver 28 includes supporting portions 28a and 28b in order to rotate the louvers 26 and 28 separately in the first accommodating window 13a. Further, the louver 25 includes supporting portions 25a and 25b and the louver 27 includes supporting portions 27a and 27b in order to rotate the louvers 25 and 27 separately in the second accommodating window 13c. Furthermore, the supporting portions 25a, 25b, 26a, 26b, 27a, 27b, 28a, and 28b may be separated from or integrally formed with the louvers 25, 26, 27, and 28.

The second link mechanism 32 includes first and second link brackets 32a and 32j, a base bracket 32b, a spring 32c, a fixing member 32d, a swing arm 32h, a rod 32k, and the like. The second link mechanism 32 operates a portion of or all of the louvers 25, 26, 27, and 28.

The first link bracket 32a is a member connecting between the supporting portion 25a of the louver 25 and the supporting portion 27a of the louver 27. Since the supporting portions 25a and 27a of the louvers 25 and 27, respectively are connected to each other by the first link bracket 32a, the louvers 25 and 27 are simultaneously operated. The second link bracket 32j is a member connecting between the supporting portion 26a of the louver 26 and the supporting portion 28a of the louver 28. Since the supporting portions 26a and 28a of the louvers 26 and 28, respectively are connected to each other by the second link bracket 32j, the louvers 26 and 28 are simultaneously operated. The rod 32k connects the first and second link brackets 32a and 32j to each other. Accordingly, the louvers 25, 26, 27, and 28 simultaneously open and close in accordance with a rotation of the rod 32k.

The base bracket 32b includes a locking portion 32e, a stopper 32f, an attachment portion 32s, an insertion portion 32r, and the like. The locking portion 32e is applied along with a locking portion 32g of the swing arm 32h, which will be described below. The locking portion 32e has a convex portion so as to lock the spring 32c thereto. The stopper 32f has an end formed into an L-shape and serves to restrict a rotation range of the swing arm 32h. The attachment portion 32s is arranged adjacent to the stopper 32f. The swing arm 32h described below is rotatably attached to the attachment portion 32s. The insertion portion 32r is arranged at an upper end of the base bracket 32b in the vertical direction of the vehicle. The connecting member 12 is inserted into the insertion portion 32r.

The swing arm 32h is rotatably attached to the attachment portion 32s of the base bracket 32b by means of a bolt 32i. The swing arm 32h has a rotation center at a first end. A second end of the swing arm 32h is bent into an L-shape and the connecting member 12 is fixed to the second end of the swing arm 32h by means of the fixing member 32d.

Further, the first end of the swing arm 32h is connected to the rod 32k. As described above, the rod 32k is connected to the first and second link brackets 32a and 32j and further connected to the louvers 25, 26, 27, and 28. Accordingly, when the swing arm 32h rotates, all of the louvers 25, 26, 27, and 28 are simultaneously operated.

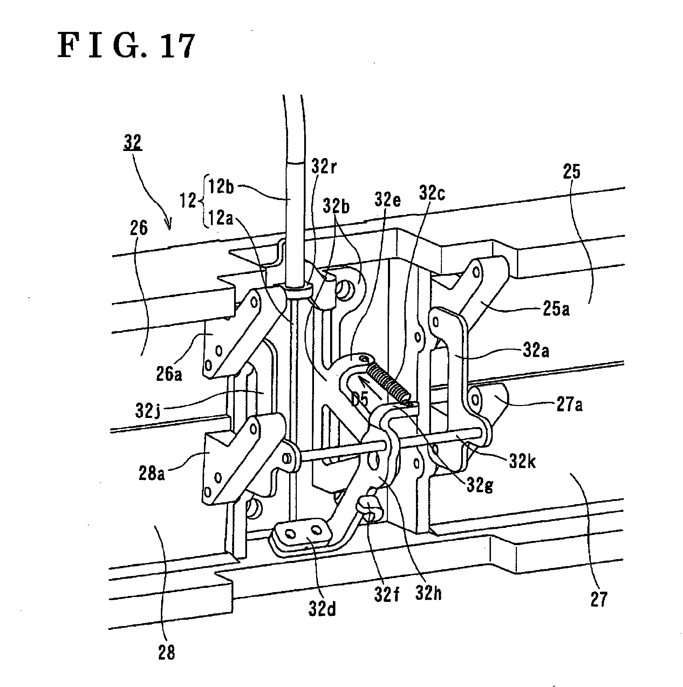

As described above, the spring 32c is locked between the locking portion 32e of the base bracket 32b and the locking portion 32g of the swing arm 32h. The base bracket 32b is accommodated within the recessed accommodating portion 13b so as to be fixed thereto. Accordingly, the connecting member 12 fixed at the second end of the swing arm 32h is biased by the spring 32c in a predetermined direction corresponding to a direction indicated by an arrow D5 shown in Fig. 17A (in particular, a direction in which the louvers 25, 26, 27, and 28 are operated into the fully closed state). Consequently, the louvers 25, 26, 27, and 28 are maintained in the fully closed state as long as the connecting member 12 does not move against a biasing force of the spring 32c. Moreover, even when the air drawn from the grille opening portion G of the front grille reaches the louvers 25, 26, 27, and 28, the fully closed state of the louvers 25, 26, 27, and 28 is maintained.

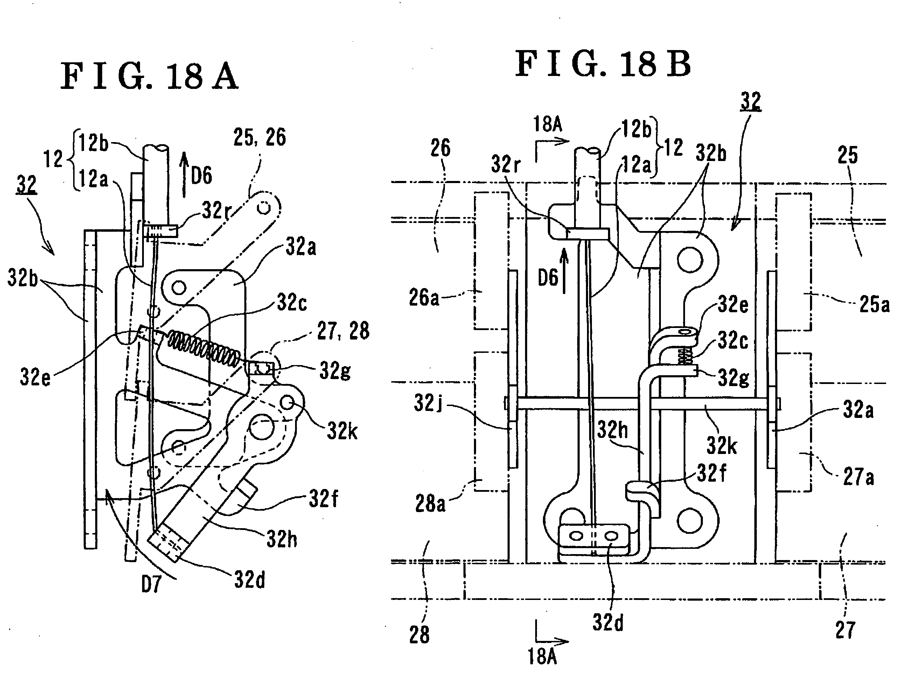

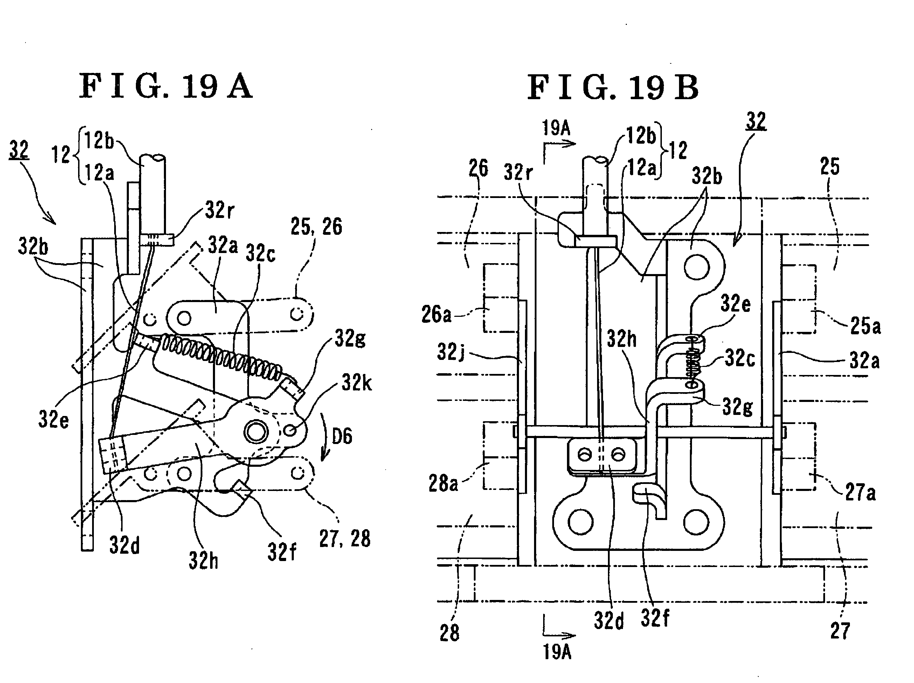

The movement of the louvers 25, 26, 27, and 28 in accordance with the movement of the connecting member 12 in the second case 13 configured as described above will be explained as follows with reference to Figs. 17A to 20B. In particular, an example of the operation of the louvers 25, 26, 27, and 28, which proceeds approximately simultaneously with the operation in the first case 11 illustrated in Figs. 12A to 15, will be described below. Fig. 18B, Fig. 19B, and Fig. 20B show plan views of the second link mechanism 32 seen from the back side of the movable grille shutter device 10. Fig. 18A, Fig. 19A, and Fig. 20A show lateral views of the second link mechanism 32, which are taken along the lines 18A-18A of Fig. 18B, 19A-19A of Fig. 19B, and 20A-20A of Fig. 19B, respectively and seen from the aforementioned back side.

In Fig. 17, the plurality of louvers 25, 26, 27, and 28 are in the fully closed state where the air drawn from the grille opening portion G adjacent to the bumper B does not flow into the engine compartment E. As described above, the swing arm 32h is biased by the spring 32c in the direction indicated by the arrow D5. As illustrated in Fig. 18A and Fig. 18B, the swing arm 32h is supported by the stopper 32f of the base bracket 32b in contact therewith so as not to rotate under the fully closed state of the louvers 25, 26, 27, and 28.

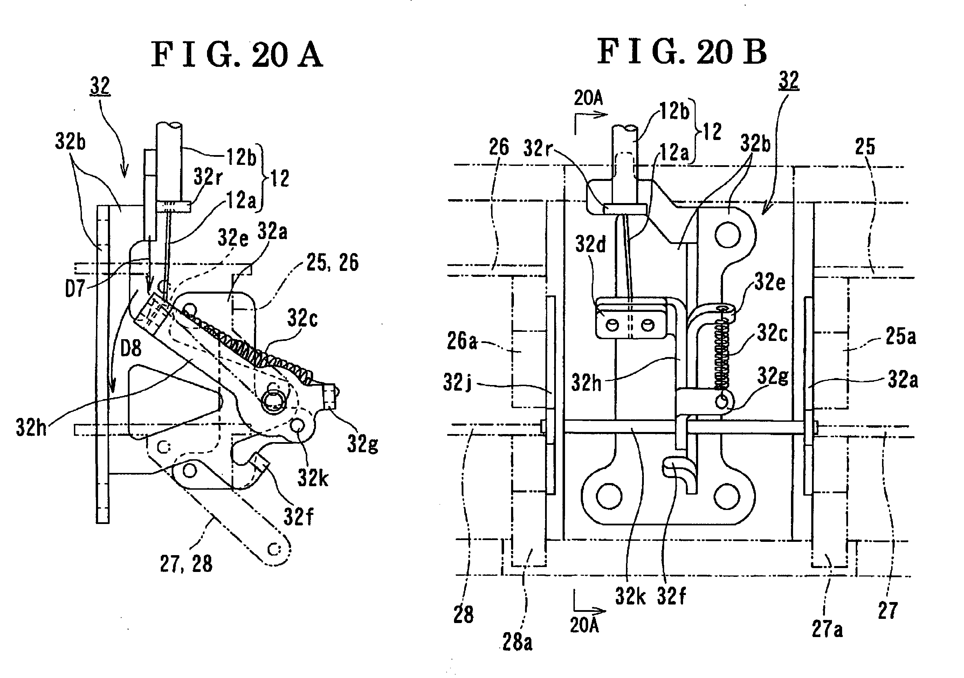

Under this condition, when the actuator 30 arranged in the first case 11 is driven in the second direction, the swing arm 31 h arranged in the first case 11 rotates in the direction indicated by the arrow D3 shown Fig. 12A. The first end of the connecting member 12 fixed to the swing arm 31 h is pulled in accordance with the rotation of the swing arm 31 h; therefore, the second end of the connecting member 12 moves in a direction indicated by an arrow D6 illustrated in Fig. 18A and Fig. 18B. Further, as shown in Fig. 18A, the swing arm 32h rotates against the biasing force of the spring 32c in a fully opening direction (indicated by an arrow D6 shown in Figs. 19A) of the louvers 25, 26. 27, and 28 in accordance with the movement of the connecting member 12. A condition shown in Fig. 18A and Fig. 18B changes to a condition shown in Fig. 19A and 19B in accordance with the rotation of the swing arm 32h. Further, the actuator 30 is continuously driven in the second direction, the condition shown in Fig. 19A and Fig. 19B changes to a condition shown in Fig. 20A and Fig. 20B.

When the swing arm 32h is rotated (operated), the rod 32k connected to the swing arm 32h rotates and the louvers 25, 26, 27, and 28 are operated via the first and second link brackets 32a and 32j accordingly. For example, as the actuator 30 is driven in the second direction, the louvers 25, 26, 27, and 28 shown in Fig. 18A and Fig. 18B change from the fully closed state to the partially opened state shown in Fig. 19A and Fig. 19B and afterwards change to the fully opened state shown in Fig. 20A and Fig. 20B. After changing to the fully opened state as described above, the louvers 25, 26, 27, and 28 are as illustrated in Fig. 15 seen from the front side of the movable grille shutter device 10.

Meanwhile, in the condition shown in Fig. 20A and Fig. 20B, when the actuator 30 arranged in the first case 11 is driven in the first direction, the swing arm 31h arranged in the first case 11 rotates in a direction indicated by an arrow D4 shown in Fig. 14A. The first end of the connecting member 12 fixed to the swing arm 31h is pulled in the same direction as the direction indicated by the arrow D4 in accordance with rotation of the swing arm 31 h. Accordingly, the second end of the connecting member 12 shown in Fig. 18A and Fig. 18B moves in a direction indicated by an arrow D7 shown in Fig. 20A. As a result, the swing arm 32h connected to the connecting member 12 rotates in accordance with the biasing force of the spring 32c in a fully closing direction of the louvers 25, 26, 27, and 28 (direction indicated by an arrow D8 in Fig. 20A). The condition shown in Fig. 20A and Fig. 20B changes to the condition shown in Fig. 18A and Fig. 18B in accordance with the rotation of the swing arm 32h. Further, as the actuator 30 is continuously driven in the first direction, the condition shown in Fig. 18A and Fig. 18B returns to the initial state illustrated in Figs. 3, 4, and 17.

According to the first embodiment, the first link mechanism 31 includes the cam 31 d connected to the main shaft (output shaft) of the actuator 30 serving as the drive unit, the first link bracket 31e having a first end connected to the main shaft of the actuator 30 in the same way as the cam 31 d, the second link bracket 31f having a first end rotatably attached to a second end of the first link bracket 31e and a second end connected to the louvers 21 and 22 via the rods 31g and 31c, and the swing arm 31h connected to the louvers 23 and 24 excluding the louvers 21 and 22. When the actuator 30 is driven in the second direction under the fully closed state of the louvers 21, 22, 23, and 24, the cam 31d rotates in the second direction and engages with the swing arm 31h to rotate the louvers 23 and 24 partially out of the louvers 21, 22, 23, and 24, thereby operating the louvers 23 and 24 excluding the louvers 21 and 22.

Thus, for example, when the actuator 30 is driven in the fully opening direction (direction indicated by the arrow D1 in Fig. 7A) under the fully closed state of the louvers 21, 22, 23, and 24, the louvers 21 and 22 out of the louvers 21, 22, 23, and 24 are partially operated by a driving force of the actuator 30 via the first and second link brackets 31e and 31f. Meanwhile, when the actuator 30 is driven in the opposite direction (second direction indicated by the arrow D2 shown in Fig. 12A) of the first direction under the aforementioned fully opened state of the louvers 21 and 22, the pin 31k arranged at the cam 31d is inserted between the first and second protruding portions 31n and 31p. Accordingly, the pin 31k engages with the swing arm 31h and the rest of the louvers 23 and 24 are operated by the driving force of the actuator 30 via the swing arm 31 h. Thus, the opening and closing operations of the louvers 21 and 22 and the opening and closing operations of the louvers 23 and 24 are separately controlled by an operating load of the actuator 30 to therefore reduce the output of the actuator 30.

Additionally, the movable grille shutter device 10 according to the first embodiment is configured so that the stopper portion 31w selectively contacting the swing arm 31h is arranged at the first case 11. Moreover, a slide surface contacting an end face of the swing arm 31h is formed on the outer peripheral surface of the first plate of the cam 31d. Accordingly, for example, when the louvers 21 and 22 under the fully opened state as shown in Fig. 9A and Fig. 9B are operated in the second direction indicated by the arrow D2 shown in Fig. 9A, i.e. the actuator 30 is driven in the second direction under the fully opened state of the louvers 21 and 22, the position of the swing arm 31 h is appropriately maintained because the swing arm 31 h is retained at the outer peripheral surface of the first plate of the cam 31 d and the stopper portion 31w of the first case 11 so as not to rotate. Further, only when the actuator 30 is driven in the second direction under the fully opened state of the louvers 21 and 22, the maintained position of the swing arm 31h relative to the outer peripheral surface of the first plate of the cam 31d is released within a range specified by a notch formed on the outer peripheral surface of the first plate of the cam 31d. Accordingly, the position of the swing arm 31h may be maintained by simply configuring the cam 31d.

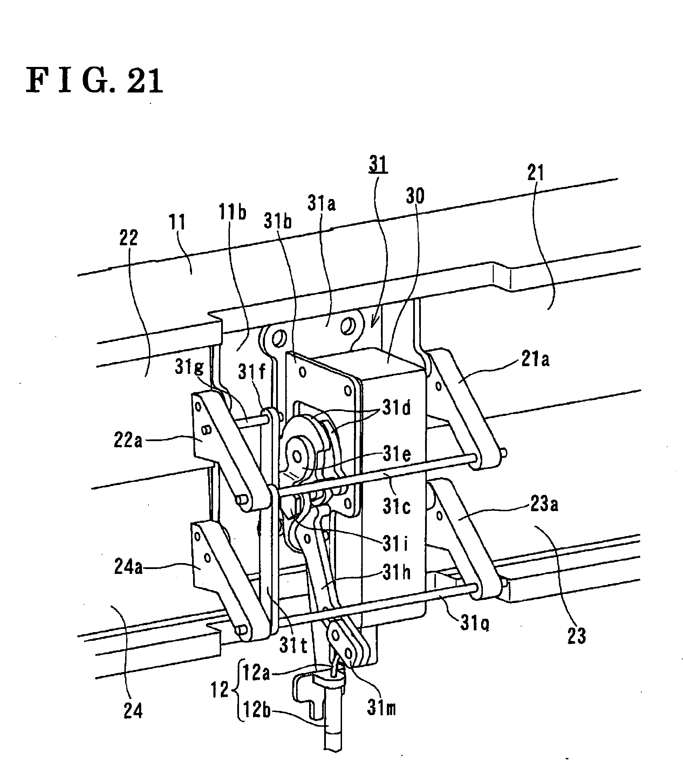

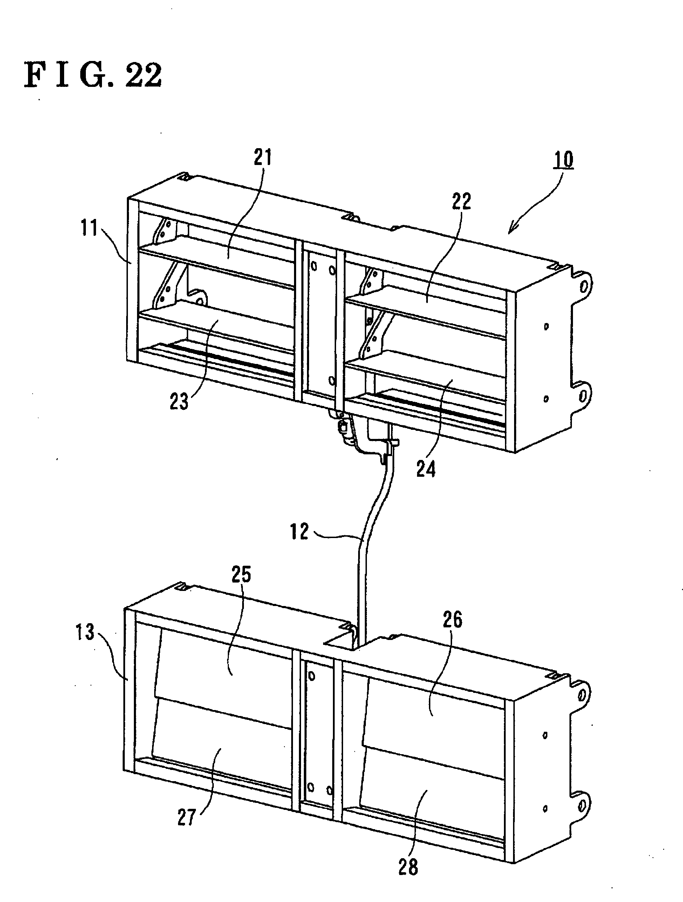

A second embodiment of the movable grille shutter device 10 will be described below with reference to Fig. 21 and Fig. 22. According to the movable grille shutter device 10 described in the second embodiment, the first and second link mechanisms 31 and 32 arranged respectively in the first and second cases 11 and 13 attached to the vehicle body C are connected to each other by the connecting member 12. Further, the operation for either all of the plurality of louvers 21, 22, 23, and 24 arranged in the first case 11 or all of the plurality of louvers 25, 26, 27, and 28 arranged in the second case 13, or the operation for all of the plurality of louvers 21, 22, 23, 24 arranged in the first case 11 and all of the plurality of louvers 25; 26, 27, and 28 arranged in the second case 13, is selectable by the movable grille shutter device 10 according to the second embodiment. In addition, for brief explanations, only different points from the first embodiment will be explained in the second embodiment. Accordingly, the same configurations of the second embodiment as those of the first embodiment are denoted by the same reference numbers.

Fig. 21 shows the first link mechanism 31 configured differently from the configuration of the first link mechanism 31 shown in Fig. 6. The first link mechanism 31 shown in Fig. 21 is different from the first link mechanism 31 shown in Fig. 6 in that a link bracket 31t is added. The link bracket 31t connects the rods 31c and 31q. As explained in the first embodiment, the rod 31c connects the supporting portion 21 a of the louver 21 and the supporting portion 22a of the louver 22 to each other and the rod 31q connects the supporting portion 23a of the louver 23 and the supporting portion 24a of the louver 24 to each other. As a result, all of the louvers 21, 22, 23, and 24 are simultaneously operated by the link bracket 31t.

For example, when the actuator 30 is driven in the first direction under the initial state illustrated in Fig. 3 and Fig. 4, the louvers 21, 22, 23, and 24 arranged in the first case11 change from the fully closed state to the intermediate state and then change to the fully opened state shown in Fig. 22. At this time, the louvers 25, 26, 27, and 28 arranged in the second case 13 remain in the fully closed state. Meanwhile, when the actuator 30 is driven in the second direction under the fully opened state of the louvers 21, 22, 23, and 24 as shown in Fig. 22, the louvers 21, 22, 23, and 24 arranged in the first case11 change to the intermediate state and then return to the initial state shown in Fig. 3 and Fig. 4.

In addition, when the actuator 30 is driven in the second direction under the initial state shown in Fig. 3 and Fig. 4, all of the louvers 21 to 28 simultaneously change from the fully closed state to the intermediate state and then change to the fully opened state shown in Fig. 15. Meanwhile, when the actuator 30 is driven in the first direction under the fully opened state illustrated in Fig. 15, all of the louvers 21 to 28 simultaneously change to the intermediate state and then return to the initial state shown in Fig. 3 and Fig. 4.

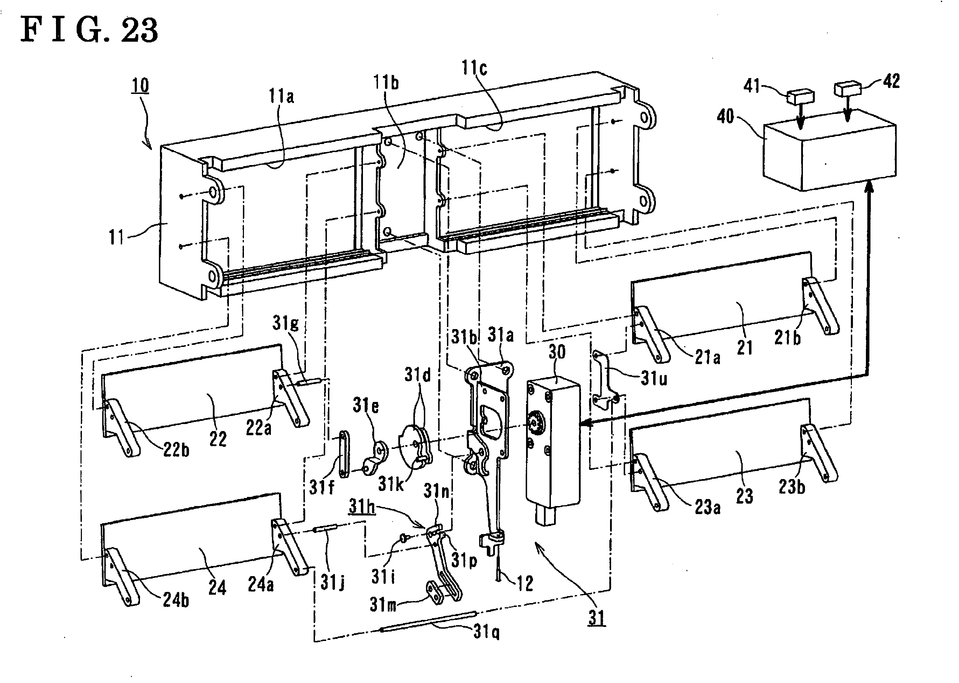

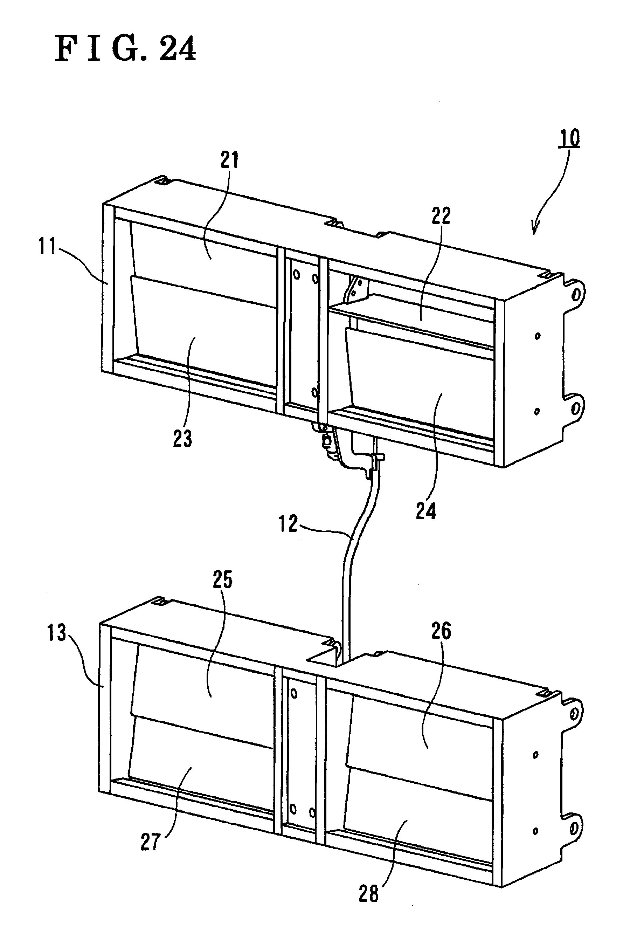

A third embodiment of the movable grille shutter device 10 will be described below with reference to Fig. 23 and Fig. 24. According to the movable grille shutter device 10 described in the third embodiment, the first and second link mechanisms 31 and 32 arranged respectively in the first and second cases 11 and 13 attached to the vehicle body C are connected to each other by the connecting member 12. Further, the operation for either a portion (one) of the plurality of louvers 21, 22, 23, and 24 arranged in the first case 11 or a portion (one) of the plurality of louvers 25, 26, 27, and 28 arranged in the second case 13, or the operation for all of the plurality of louvers 21, 22, 23, and 24 arranged in the first case 11 and all of the plurality of louvers 25, 26, 27, and 28 arranged in the second case 13, is selectable by the movable grille shutter device 10 according to the third embodiment. In addition, for brief explanations, only different points from the first embodiment will be described in the third embodiment. Accordingly, the same configurations of the third embodiment as those of the first embodiment are denoted by the same reference numbers.

Fig. 23 shows the first link mechanism 31 configured differently from the configuration of the first link mechanism 31 shown in Fig. 5. The first link mechanism 31 shown in Fig. 23 is different from the first link mechanism 31 shown in Fig. 5 in that a link bracket 31u is applied instead of the rod 31c shown in Fig. 5 and in that the rod 31q connects the supporting portion 23a of the louver 23, the supporting portion 24a of the louver 24, and the link bracket 31u to one another. According to such configuration of the first link mechanism 31, all of the louvers 21, 23, and 24 are simultaneously operated in accordance with the rotation of the rod 31q. In other words, all of the louvers 21, 23, and 24 excluding the louver 22 are operated in accordance with the rotation of the rod 31q.

For example, when the actuator 30 is driven in the first direction under the initial state illustrated in Fig. 3 and Fig. 4, the louver 22 of the first case 11 changes from the fully closed state to the intermediate state and then changes to the fully opened state as shown in Fig. 24. At this time, the louvers 21, 23, and 24 of the first case 11 and the louvers 25, 26, 27, and 28 of the second case 13 remain in the fully closed state. Since only the louver 22 is in the fully opened state under a condition shown in Fig. 24, a desired specific device and/or component (for example, the radiator R and/or the inverter IV illustrated in Fig. 1 and Fig. 2) arranged in the engine compartment E may be cooled. Meanwhile, when the actuator 30 is driven in the second direction under the condition shown in Fig. 24, the louver 22 of the first case 11 changes to the intermediate state and then returns to the initial state shown in Fig. 3 and Fig. 4.

In addition, when the actuator 30 is driven in the second direction under the initial state shown in Fig. 3 and Fig. 4, all of the louvers 21 to 28 simultaneously change from the fully closed state to the intermediate state and then change to the fully opened state. Meanwhile, when the actuator 30 is driven in the first direction under the fully opened state of the louvers 21 to 28 as illustrated in Fig. 15, all of the louvers 21 to 28 simultaneously change to the intermediate state and then return to the initial state shown in Fig. 3 and Fig. 4.

As described above, the movable grille shutter device 10 explained in the aforementioned first to third embodiments includes the first and second link mechanisms 31 and 32, the first and second cases 11 and 13, and the actuator 30 serving as the drive unit and driving the first link mechanism 31 arranged in the first case 11. The first link mechanism 31 opens and closes the plurality of louvers 21, 22, 23, and 24 and the second link mechanism 32 opens and closes the plurality of louvers 25, 26, 27, and 28. The first case 11 including the plurality of louvers 21, 22, 23, and 24 and the first link mechanism 31 and the second case 13 including the plurality of louvers 25, 26, 27, and 28 and the second link mechanism 32 are attached to the vehicle body C. The first link mechanism 31 is configured so as to selectively operate a portion of the plurality of louvers 21, 22, 23, and 24 (i.e. only the louvers 21 and 22 in the first embodiment and only the louver 22 in the third embodiment) or all of the plurality of louvers 21, 22, 23, and 24 in accordance with the operation of the actuator 30.

In addition, the first link mechanism 31 operates, for example, the louvers 21 and 22 in the first embodiment and operates the louver 22 only in the third embodiment. Alternatively, the fist link mechanism 31 may selectively and partially operate any of the louvers 21, 22, 23, and 24 as required. For example, the louvers 21 and 23 or only the louver 24 may be operated by the first link mechanism 31. It is desirable to select any of the louvers 21, 22, 23, and 24 appropriately for cooling the desired specific device and/or component arranged in the engine compartment E. A target louver out of the target louvers 21, 22, 23, and 24 is selectively set by modifying the configuration of the first link mechanism 31.

The aforementioned movable grille shutter device 10 may be applied to various embodiments as long as such embodiments do not deviate from the summary of the first to third embodiments.

According to the movable grille shutter device 10 according to the aforementioned first to third embodiments, when the actuator 30 is driven in accordance with the driving signal transmitted from the drive control section 40 in the first or second direction, predetermined louvers (the louvers 21 and 22 in the first embodiment, the louvers 21, 22, 23, and 24 in the second embodiment, and the louver 22 in the third embodiment) change from the fully closed state to the fully opened state. In addition to such configuration, the movable grille shutter device 10 may be configured so that the plurality of louvers 21 to 28 arranged in the first and second cases 11 and 13 are divided into multiple groups and that the opening operation of the louvers 21 to 28 is controlled for each group. For example, in the first embodiment, the louvers 21, 22, 23, and 24 may be divided in a first group of the louvers 21 and 22 and a second group of the louvers 23 and 24 to separately adjust the opening of the louvers 21 and 22 in the first group and the opening of the louvers 23 and 24 in the second group. An appropriate adjustment of the opening of the louvers 21, 22, 23, and 24 in the respective first and second groups may control a temperature applied to a local portion of the engine compartment E and surely prevent the turbulent flow of air occurring because of the air drawn from the grille opening portion G.

According to the movable grille shutter device 10 according to the aforementioned first to third embodiments, four louvers 21, 22, 23, and 24 are arranged in the first case 11 and four louvers 25, 26, 27, and 28 are arranged in the second case 13 (see Fig. 3 and Fig. 4). Alternatively, a different number of louvers may be arranged in the first and second cases 11 and 13. Further, when the same number of louvers is arranged in the first and second cases 11 and 13, the louvers are not limited to four louvers. In particular, the number of louvers to be arranged in the first and second cases 11 and 13 is appropriately determined in such a way that any of the louvers may be positioned with respect to the local portion of the engine compartment E to which the air drawn from the grille opening portion G is forwarded. Thus, the temperature applied to the local portion of the engine compartment E is appropriately controlled.

Moreover, a plurality of cases, i.e. the first and second cases 11 and 13 (see Fig. 3 and Fig. 4) are provided to the movable grille shutter device 10 according to the aforementioned first to third embodiments. In addition to such configuration, the number of cases to be applied to the movable grille shutter device 10 may be one (for example, the case 11 only) or three or more cases may be applied to the movable grille shutter device 10. In either configuration, such cases are attached to the vehicle body C to thereby ensure assemblability and operational efficiency in the same way as in a conventional movable grille shutter device. Alternatively, the number of cases is increased, thereby; even when louvers arranged in one of the cases fail to operate properly, other louvers arranged in the other of the cases are operated to adjust the air drawn from the grille opening portion accordingly. Thus, even when a failure and the like occur among the louvers, the control of the temperature applied to the local portion of the engine compartment E may be maintained.

In addition, the speed sensor 41 and/or the coolant temperature sensor 42 are arranged in the movable grille shutter device 10. Accordingly, a relation between the speed sensor 41 and/or the coolant temperature sensor 42 included in the drive control section 40 and the opening and closing operations of the plurality of louvers 21 to 28 and the opening thereof is mapped with reference to the rotation of the actuator 30. Consequently, a driving signal is transmitted from the drive control section 40 in accordance with a value selected from the map. Thus, the opening and closing operations of the louvers 21 to 28 and the opening thereof are controlled. Alternatively, a specific mathematical formula may be applied to control the opening and closing operations of the louvers 21 to 28 and the opening thereof.

In other words, according to the movable grille shutter device 10 described in the first to third embodiments, the drive control section 40 controls the opening of all of or a portion of the plurality of louvers 21 to 28 arranged in the first and second cases 11 and 13 in accordance with a vehicle speed detected by the speed sensor 41 that detects the vehicle speed. Further, the drive control section 40 controls the opening of all of or a portion of the plurality of louvers 21 to 28 arranged in the first and second cases 11 and 13 in accordance with a water temperature of the radiator R, which is detected by the coolant temperature sensor 42.

Instead of (or in addition to) the aforementioned configuration, a different sensor may be applied to the movable grille shutter device 10 to thereby allow the drive control section 40 to transmit a value detected by the sensor to the actuator 30; therefore, the opening of the plurality of louvers 21 to 28 is controlled. The different sensor includes, for example, a sensor detecting a temperature of a device and the like (for example, the inverter IV) arranged at the local portion of the engine compartment E, a sensor detecting a flow rate and a temperature of the air drawn from the grille opening portion G of the front grille, and the like. The former sensor monitors a temperature of the local portion of the engine compartment E, therefore controlling opening and closing operations of louvers so that the local portion may be maintained at a predetermined temperature. The latter sensor determines how the louvers should be opened and closed in order to maintain the predetermined temperature of the local portion. Accordingly, the temperature applied to the local portion of the engine compartment E is appropriately controlled. In particular, a portion of the engine compartment E cooled by the movable grille shutter device 10 is not limited to an internal-combustion and the movable grille shutter device 10 may cool batteries for electric and hybrid vehicles. Additionally, the movable grille shutter device 10 may absorb air for cooling controlling circuits of the inverter IV and the like to maintain a temperature of a target portion in an appropriate cooled state accordingly. Further, the flow rate of the air may be modified depending on the opening operation of the plurality of louvers 21 to 28.

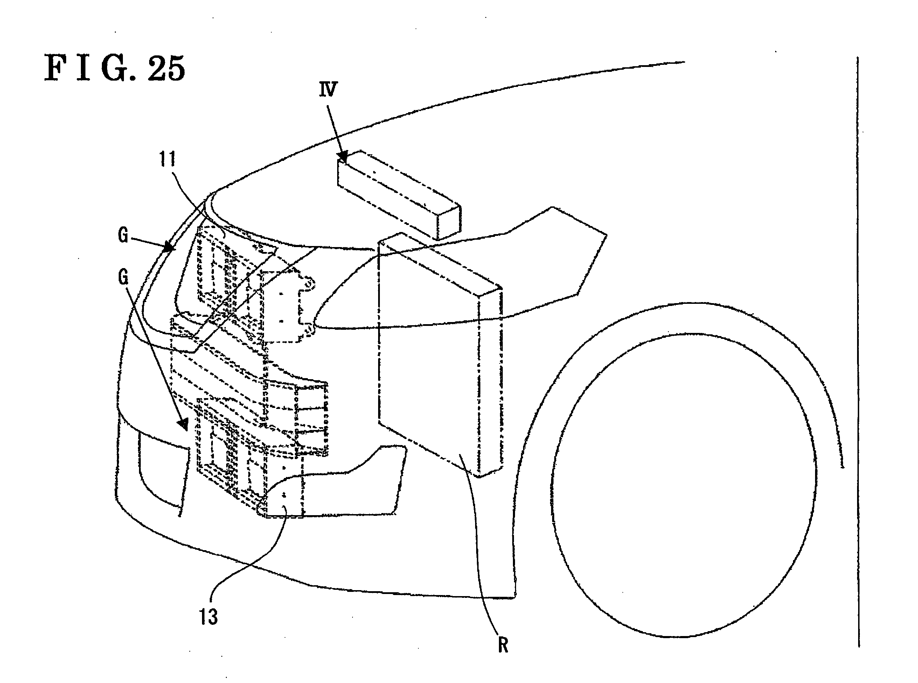

As illustrated in Fig. 25, the radiator R may be arranged directly below the inverter IV. In this case, the air drawn into the engine compartment E approximately simultaneously reaches the radiator R and the inverter IV and cools the radiator R and the inverter IV. Accordingly, the same cooling condition may be set for the radiator R and the inverter IV.

## Claims

1. An movable grille shutter device (10) for a vehicle, comprising:
a case (11) adapted to be attached to a vehicle body (C);
a plurality of louvers (21, '22, 23, 24) arranged in the case (11), the plural louvers (21, 22, 23, 24) being allowed to change between fully opened and closed postures for permitting and preventing, respectively, an air flow through a grille opening portion (G) of a front grille flows into an engine compartment (E);
a first link mechanism (31) arranged in the case (11) and opening and closing the plurality of louvers; and
a drive unit (30) driving the link mechanism (31) arranged in the case (11),
wherein the link mechanism (31) is driven by the drive unit (30) so as to selectively operate a portion of and all of the plurality of louvers (21, 22, 23, 24),
**characterized in that** the link mechanism (31) operates the portion of the plurality of louvers (21, 22, 23, 24) when the drive unit (30) is driven in a first direction, and the link mechanism (31) operates all of the louvers (21, 22, 23, 24) when the drive unit (30) is driven in a second direction.

2. The movable grille shutter device (10) according to Claim 1, wherein the case (11) includes a plurality of cases (11, 13), and a second link mechanism (32) arranged in the case (13) not provided with the drive unit (30) is operatively connected to the drive unit (30) by a connecting member (12).

3. The grill shutter device (10) according to Claim 2, wherein the first link mechanism (31) operates all of or the portion of the plurality of louvers (21, 22, 23, 24, 25, 26, 27, 28) arranged in a portion of the plurality of cases (11, 13) when the drive unit (30) is driven in the first direction, and the first link mechanism (31) operates all of the plurality of louvers (21, 22, 23, 24, 25, 26, 27, 28) arranged in the plurality of cases (11, 13) when the drive unit (30) is driven in the second direction.

4. The grill shutter device (10) according to an one of Claims 1 to 3, wherein the first link mechanism (31) includes a cam (31d) connected to a main shaft of the drive unit (30), a first link bracket (31e) having a first end connected to the main shaft of the drive unit (30), a second link bracket (31f) having a first end rotatably attached to a second end of the first link bracket (31e) and a second end connected to the portion of the louvers (21, 22, 23, 24), and a swing arm (31 h) connected to the louvers (25, 26, 27, 28) excluding the louvers (21, 22, 23, 24) to which the second link bracket (31f) is connected, and
wherein when the cam (31d) rotates under the fully closed state of the louvers (21, 22, 23, 24) to which the second bracket (31f) is connected, the cam (31d) engages with the swing arm (31h) and operates the louvers (25, 26, 27, 28) to which the swing arm (31h) is connected.

5. The movable grille shutter device (10) according to any one of Claims 1 to 4, wherein the case (11) is provided with a stopper portion (31w) selectively contacting the swing arm (31h) and the cam (31d) has an outer peripheral surface selectively contacting the swing arm (31h), and
wherein a position of the swing arm (31h) is maintained by the outer peripheral surface of the cam (31d) and the stopper portion (31w) of the case (11) that are in contact with the swing arm (31h) when the drive unit (30) is driven to operate the portion of the louvers (21, 22, 23, 24) into the fully closed state and the position of the swing arm (31h) maintained by the outer peripheral surface of the cam (31d) and the stopper portion (31w) of the case (11) is released when the drive unit (30) is driven to operate all of the louvers (21, 22, 23, 24) into the fully opened state.

6. The movable grille shutter device (10) according to Claim 1, wherein the first link mechanism (31) is configured so that the cam (31d) connected to the main shaft of the drive unit (30) locks a member connected to any of the louvers (21, 22, 23, 24, 25, 26, 27, 28).

7. The movable grille shutter device (10) according to Claim 1, further comprising a drive control section (40) controlling opening of all of or the portion of the louvers (21, 22, 23, 24) accommodated in the case (11).

8. The movable grille shutter device (10) according to any one of Claims 1 to 7, wherein the drive control section (40) controls the opening of all of or the portion of the louvers (21, 22, 23, 24) accommodated in the case (11) in accordance with a speed of the vehicle, which is detected by a speed sensor (41).

9. The movable grille shutter device (10) any one of Claims 1 to 7, wherein the drive control section (40) controls the opening of all of or the portion of the louvers (21, 22, 23 24) accommodated in the case (11) in accordance with a water temperature of a radiator (R), which is detected by a temperature sensor (42).

10. The movable grille shutter device (10) according to any one of Claims 1 to 9, wherein the louvers (21, 22, 23, 24) arranged in the case (11) are divided in a plurality of groups and the opening of the louvers (21, 22, 23, 24) is controlled for each of the plurality of groups.

## Patentansprüche

1. Bewegliche Kühlergrillabdeckungsvorrichtung (10) für ein Fahrzeug, umfassend:
ein Gehäuse (11), das dazu geeignet ist, an einer Fahrzeugkarosserie (C) angebracht zu sein;
mehrere Luftklappen (21, 22, 23, 24), die in dem Gehäuse (11) angeordnet sind, wobei es den Luftklappen (21, 22, 23, 24) ermöglicht ist, zwischen vollständig geöffneten und geschlossenen Stellungen zu wechseln, um zu ermöglichen bzw. zu verhindern, dass ein Luftstrom durch einen Kühlergrillöffnungsabschnitt (G) eines Frontgrills in einen Motorraum (E) strömt;
einen ersten Verbindungsmechanismus (31), der in dem Gehäuse (11) angeordnet ist und die mehreren Luftklappen öffnet und schließt; und
eine Antriebseinheit (30), die den Verbindungsmechanismus (31), der in dem Gehäuse (11) angeordnet ist, antreibt,
wobei der Verbindungsmechanismus (31) durch die Antriebseinheit (30) zum selektiven Betreiben eines Abschnitts und aller der mehreren Luftklappen (21, 22, 23, 24) angetrieben ist,
**dadurch gekennzeichnet, dass** der Verbindungsmechanismus (31) den Abschnitt der mehreren Luftklappen (21, 22, 23, 24) betreibt, wenn die Antriebseinheit (130) in einer ersten Richtung angetrieben ist, und der Verbindungsmechanismus (31) alle der Luftklappen (21, 22, 23, 24) betreibt, wenn der Antriebsmechanismus in einer zweiten Richtung betrieben ist.

2. Bewegliche Kühlergrillabdeckungsvorrichtung (10) nach Anspruch 1, wobei das Gehäuse (11) mehrere Gehäuse (11, 13) enthält und ein zweiter Verbindungsmechanismus (32), der in dem Gehäuse (13) angeordnet ist, welches nicht mit der Antriebseinheit (30) versehen ist, betriebsfähig durch ein Anschlussglied (12) an die Antriebseinheit (30) angeschlossen ist.

3. Kühlergrillabdeckungsvorrichtung (10) nach Anspruch 2, wobei der erste Verbindungsmechanismus (31) alle oder den Abschnitt der mehreren Luftklappen (21, 22, 23, 24) betreibt, die in einem Abschnitt der mehreren Gehäuse (11, 13) angeordnet sind, wenn die Antriebseinheit (30) in der ersten Richtung angetrieben ist, und der erste Verbindungsmechanismus (31) alle der mehreren Luftklappen (21, 22, 23, 24, 25, 26, 27, 28) betreibt, die in den mehreren Gehäusen (11, 13) angeordnet sind, wenn die Antriebseinheit (30) in der zweiten Richtung angetrieben ist.

4. Kühlergrillabdeckungsvorrichtung (10) nach einem der Ansprüche 1 bis 3, wobei der erste Verbindungsmechanismus (31) einen Nocken (31d), der an eine Hauptwelle der Antriebseinheit (30) angeschlossen ist, eine erste Verbindungsstütze (31e) mit einem ersten Ende, das an die Hauptwelle der Antriebseinheit (30) angeschlossen ist, eine zweite Verbindungsstütze (31f) mit einem ersten Ende, das drehbar an ein zweites Ende der ersten Verbindungsstütze (31e) angebracht ist, und einem zweiten Ende, das an den Abschnitt der Luftklappen (21, 22, 23, 24) angeschlossen ist, und einen Schwenkarm (31h) enthält, der unter Auschluss der Luftklappen (21, 22, 23, 24), an die die zweite Verbindungsstütze (31f) angeschlossen ist, an die Luftklappen (25, 26, 27, 28) angeschlossen ist, und
wobei der Nocken (31d), wenn der Nocken (31d) im vollständig geschlossenen Zustand der Luftklappen (21, 22, 23, 24), an die die zweite Verbindungsstütze (31f) angeschlossen ist, dreht, den Schwenkarm (31h) in Eingriff nimmt und die Luftklappen (25, 26, 27, 28) betreibt, an die der Schwenkarm (31h) angeschlossen ist.

5. Bewegliche Kühlergrillabdeckungsvorrichtung (10) nach einem der Ansprüche 1 bis 4, wobei das Gehäuse (11) mit einem Anschlagabschnitt (31w) versehen ist, der selektiv mit dem Schwenkarm (31h) in Kontakt steht, und der Nocken (31d) eine Außenumfangsfläche aufweist, die selektiv mit dem Schwenkarm (31h) in Kontakt steht, und
wobei eine Position des Schwenkarms (31h) durch die Außenumfangsfläche des Nockens (31d) und den Anschlagabschnitt (31w) des Gehäuses (11), die in Kontakt mit dem Schwenkarm (31h) stehen, erhalten ist, wenn die Antriebseinheit (30) zum Betreiben des Abschnitts der Luftklappen (21, 22, 23, 24) in den vollständig geschlossenen Zustand angetrieben ist, und die Position des Schwenkarms (31h), die durch die Außenumfangsfläche des Nockens (31d) und den Anschlagabschnitt (31w) des Gehäuses (11) erhalten ist, freigegeben ist, wenn die Antriebseinheit (30) zum Betreiben aller der Luftklappen (21, 22, 23, 24) in den vollständig geöffneten Zustand angetrieben ist.

6. Bewegliche Kühlergrillabdeckungsvorrichtung (10) nach Anspruch 1, wobei der erste Verbindungsmechanismus (31) derart konfiguriert ist, dass der Nocken (31d), der an die Hauptwelle der Antriebseinheit (30) angeschlossen ist, ein Glied sperrt, das an jegliche der Luftklappen (21, 22, 23, 24, 25, 26, 27, 28) angeschlossen ist.

7. Bewegliche Kühlergrillabdeckungsvorrichtung (10) nach Anspruch 1, ferner umfassend einen Antriebssteuerungsabschnitt (40), der das Öffnen aller oder des Abschnitts der Luftklappen (21, 22, 23, 24) steuert, die in dem Gehäuse (11) aufgenommen sind.

8. Bewegliche Kühlergrillabdeckungsvorrichtung (10) nach einem der Ansprüche 1 bis 7, wobei der Antriebssteuerungsabschnitt (40) das Öffnen aller oder des Abschnitts der Luftklappen (21, 22, 23, 24), die in dem Gehäuse (11) aufgenommen sind, gemäß einer Geschwindigkeit des Fahrzeugs steuert, die durch einen Geschwindigkeitssensor (41) erkannt ist.

9. Bewegliche Kühlergrillabdeckungsvorrichtung (10) nach einem der Ansprüche 1 bis 7, wobei der Antriebssteuerungsabschnitt (40) das Öffnen aller oder des Abschnitts der Luftklappen (21, 22, 23, 24), die in dem Gehäuse (11) aufgenommen sind, gemäß einer Wassertemperatur eines Kühlers (R) steuert, die durch einen Temperatursensor (42) erkannt ist.

10. Bewegliche Kühlergrillabdeckungsvorrichtung (10) nach einem der Ansprüche 1 bis 9, wobei die Luftklappen (21, 22, 23, 24), die in dem Gehäuse (11) aufgenommen sind, in mehrere Gruppen aufgeteilt sind und das Öffnen der Luftklappen (21, 22, 23, 24) für jede der mehreren Gruppen gesteuert ist.

## Revendications

1. Dispositif (10) d'obturateur de calandre mobile pour un véhicule, comprenant :
une caisse (11) adaptée pour être fixée à un corps (C) du véhicule ;
une pluralité de grilles de ventilation (21, 22, 23, 24) agencées dans la caisse (11), les plusieurs grilles de ventilation (21, 22, 23, 24) pouvant changer entre des positions complètement ouverte et fermée pour permettre à ou empêcher, respectivement, un débit d'air à travers une partie d'ouverture (G) de calandre d'une calandre avant de circuler dans un compartiment moteur (E) ;
un premier mécanisme de liaison (31) agencé dans la caisse (11) et ouvrant et fermant la pluralité de grilles de ventilation ; et
une unité d'entraînement (30) entraînant le mécanisme de liaison (31) agencé dans la caisse (11),
dans lequel le mécanisme de liaison (31) est entraîné par l'unité d'entraînement (30) afin d'actionner au choix une partie et toutes les grilles de ventilation (21, 22, 23, 24),
**caractérisé en ce que** le mécanisme de liaison (31) actionne la partie de la pluralité de grilles de ventilation (21, 22, 23, 24) lorsque l'unité d'entraînement (30) est entraînée dans une première direction, et le mécanisme de liaison (31) actionne la totalité des grilles de ventilation (21, 22, 23, 24) lorsque l'unité d'entraînement (30) est entraînée dans une deuxième direction.

2. Dispositif (10) d'obturateur de calandre mobile selon la revendication 1, dans lequel la caisse (11) comporte une pluralité de caisses (11, 13), et un deuxième mécanisme de liaison (32) agencé dans la caisse (13) non équipé de l'unité d'entraînement (30) est relié fonctionnellement à l'unité d'entraînement (30) par un élément de raccord (12).

3. Dispositif (10) d'obturateur de calandre selon la revendication 2, dans lequel le premier mécanisme de liaison (31) actionne la totalité des grilles de ventilation (21, 22, 23, 24, 25, 26, 27, 28) ou une partie de celles-ci agencées dans une partie de la pluralité de caisses (11, 13) lorsque l'unité d'entraînement (30) est entraînée dans la première direction, et le premier mécanisme de liaison (31) actionne toute les grilles de ventilation (21, 22, 23, 24, 25, 26, 27, 28) agencées dans la pluralité de caisses (11, 13) lorsque l'unité d'entraînement (30) est entraînée dans la deuxième direction.

4. Dispositif (10) d'obturateur de calandre selon l'une quelconque des revendications 1 à 3, dans lequel le premier mécanisme de liaison (31) comporte une came (31d) reliée à un arbre principal de l'unité d'entraînement (30), un premier support de liaison (31e) comprenant une première extrémité reliée à l'arbre principal de l'unité d'entraînement (30), un deuxième support de liaison (31f) comprenant une première extrémité attachée en rotation à une deuxième extrémité du premier support de liaison (31e) et une deuxième extrémité reliée à la partie des grilles de ventilation (21, 22, 23, 24), et un bras oscillant (31h) relié aux grilles de ventilation (25, 26, 27, 28) à l'exception des grilles de ventilation (21, 22, 23, 24) auxquelles le deuxième support de liaison (31f) est relié, et
dans lequel lorsque la came (31d) tourne dans l'état dans lequel les grilles de ventilation (21, 22, 23, 24) auxquelles le deuxième support de liaison (31f) est reliée sont complètement fermées, la came (31d) s'engage avec le bras oscillant (31h) et actionne les grilles de ventilation (25, 26, 27, 28) auxquelles le bras oscillant (31h) est relié.

5. Dispositif (10) d'obturateur de calandre mobile selon l'une quelconque des revendications 1 à 4, dans lequel la caisse (11) est dotée d'une partie d'arrêt (31w) rentrant en contact, au choix, avec le bras oscillant (31h) et la came (31d) a une surface périphérique extérieure venant au choix au contact du bras oscillant (31h), et
dans lequel une position du bras oscillant (31h) est maintenue par la surface périphérique extérieure de la came (31d) et la partie d'arrêt (31w) de la caisse (11) qui sont en contact avec le bras oscillant (31h) lorsque l'unité d'entraînement (30) est entraînée pour actionner la partie des grilles de ventilation (21, 22, 23, 24) dans l'état complètement fermé et la position du bras oscillant (31h) maintenue par la surface périphérique extérieure de la came (31d) et la partie d'arrêt (31w) de la caisse (11) est libérée lorsque l'unité d'entraînement (30) est entraînée pour actionner la totalité des grilles de ventilation (21, 22, 23, 24) dans l'état complètement ouvert.

6. Dispositif (10) d'obturateur de calandre mobile selon la revendication 1, dans lequel le premier mécanisme de liaison (31) est configuré de sorte que la came (31d) reliée à l'arbre principal de l'unité d'entraînement (30) verrouille un élément relié à l'une des grilles de ventilation (21, 22, 23, 24, 25, 26, 27, 28).

7. Dispositif (10) d'obturateur de calandre mobile selon la revendication 1, comprenant en outre une section (40) de commande d'entraînement commandant l'ouverture de la totalité ou de la partie des grilles de ventilation (21, 22, 23, 24) reçues dans la caisse (11).

8. Dispositif (10) d'obturateur de calandre mobile selon l'une quelconque des revendications 1 à 7, dans lequel la section (40) de commande d'entraînement commande l'ouverture de la totalité ou de la partie des grilles de ventilation (21, 22, 23, 24) reçues dans la caisse (11) conformément à une vitesse du véhicule, qui est détectée par un capteur de vitesse (41).

9. Dispositif (10) d'obturateur de calandre mobile selon l'une quelconque des revendications 1 à 7, dans lequel la section (40) de commande d'entraînement commande l'ouverture de la totalité ou de la partie des grilles de ventilation (21, 22, 23, 24) reçues dans la caisse (11) conformément à une température d'eau d'un radiateur (R), qui est détectée par un capteur de température (42).

10. Dispositif (10) d'obturateur de calandre mobile selon l'une quelconque des revendications 1 à 9, dans lequel les grilles de ventilation (21, 22, 23, 24) reçues dans la caisse (11) sont divisées en une pluralité de groupes et l'ouverture des grilles de ventilation (21, 22, 23, 24) est commandée pour chacun de la pluralité des groupes.
